(19)

Europäisches
Patentamt

European
Patent Office

Office européen
des brevets

(11) **EP 4 723 053 A1**

(12) **EUROPÄISCHE PATENTANMELDUNG**

(43) Veröffentlichungstag:
**08.04.2026 Patentblatt 2026/15**

(21) Anmeldenummer: **24204349.5**

(22) Anmeldetag: **02.10.2024**

(51) Internationale Patentklassifikation (IPC):
**G06V 10/774** *(2022.01)* **G06V 10/80** *(2022.01)*
**G06V 10/82** *(2022.01)* **G06V 20/56** *(2022.01)*

(52) Gemeinsame Patentklassifikation (CPC):
**G06V 20/56; G06V 10/7753; G06V 10/806;
G06V 10/811; G06V 10/82**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH
70442 Stuttgart (DE)**

(72) Erfinder:
• **Drews, Florian
71272 Renningen (DE)**
• **Cattaneo, Daniele
79115 Freiburg (DE)**
• **Mohan, Rohit
79106 Freiburg (DE)**
• **Valada, Abhinav
79102 Freiburg (DE)**

(54) **VERFAHREN ZUR OBJEKTERKENNUNG IN EINER UMGEBUNG EINER ROBOTERVORRICHTUNG**

(57)    Verschiedene Aspekte betreffen ein Verfahren, aufweisend: Empfangen erster Sensordaten, welche eine Umgebung einer Robotervorrichtung in einer ersten Ansicht repräsentieren; Empfangen zweiter Sensordaten, welche die Umgebung in einer zweiten Ansicht repräsentieren; Eingeben der ersten Sensordaten in einen ersten Encoder zum Ermitteln erster intra-sensortyp Merkmale in einem ersten latenten Raum; Eingeben der zweiten Sensordaten in einen zweiten Encoder zum Ermitteln zweiter intra-sensortyp Merkmale in einem zweiten latenten Raum; Ermitteln erster inter-sensortyp Merkmale mittels Projizierens der zweiten intra-sensortyp Merkmale in den ersten latenten Raum; Ermitteln zweiter inter-sensortyp Merkmale mittels Projizierens der ersten intra-sensortyp Merkmale in den zweiten latenten Raum; Fusionieren der ersten intra-sensortyp Merkmale und der ersten inter-sensortyp Merkmale zu ersten Merkmalen; Fusionieren der zweiten intra-sensortyp Merkmale und der zweiten inter-sensortyp Merkmale zu zweiten Merkmalen; Ermitteln erster Objektkandidaten anhand der ersten Merkmale und zweiter Objektkandidaten anhand der zweiten Merkmale; Erkennen zumindest eines Objekts in der Umgebung unter Verwendung der ersten und zweiten Objektkandidaten.

Fig. 3

EP 4 723 053 A1

**Beschreibung**

Stand der Technik

Für verschiedene Anwendungen, wie beispielsweise beim autonomen Fahren, kann es erforderlich sein, Objekte in der Umgebung einer Robotervorrichtung (z.B. eines autonomen Fahrzeugs) zu erkennen. Hierzu können die Daten verschiedener Sensoren miteinander kombiniert werden. Zum Beispiel können beim autonomen Fahren Lidarsensoren zum Erfassen von Lidar-Punktwolken (welche eine Draufsicht, Vogelperspektive der Umgebung repräsentieren) und Kameras zum Erfassen von Bildern (welche eine Perspektivansicht der Umgebung repräsentieren) der Umgebung des autonomen Fahrzeugs eingesetzt werden und im Rahmen der Objekterkennung können sowohl die Lidar-Punktwolken als auch die Bilder herangezogen werden. Dies wird auch als Multi-Sensor-Fusion bezeichnet.

Üblicherweise werden bei der Multi-Sensor-Fusion die Informationen aus der Lidar-Punktwolke und die Informationen aus den Bildern entweder anhand der Rohdaten selbst, auf Merkmalsebene, oder nach dem Ermitteln von Objektkandidaten miteinander kombiniert. Werden die Informationen auf Merkmalsebene kombiniert, so werden die aus der Lidar-Punktwolke extrahierten Merkmale und aus den Bilder extrahierten Merkmale entweder in einem die Draufsicht repräsentierenden (latenten) Merkmalsraum oder in einem die Perspektivansicht repräsentierenden (latenten) Merkmalsraum miteinander kombiniert.

Um die Sicherheit von Insassen und anderen zu gewährleisten, sind bei autonomen Fahrzeugen hohe Sicherheitsanforderungen zu gewährleisten. Hierfür ist eine hohe Objekterkennungsrate von entscheidender Bedeutung. Ferner ist es zur Gewährleistung der Sicherheit ebenfalls entscheidend, dass auch bei einem Ausfall eines Sensors die Objekterkennung sichergestellt ist. Dies wird auch als Robustheit bezeichnet.

Offenbarung der Erfindung

Die vorliegende Offenbarung bezieht sich auf ein Verfahren zum Erkennen von Objekten (kurz: Objekterkennung) in einer Umgebung einer Robotervorrichtung, welches eine erhöhte Objekterkennungsrate und eine größere Robustheit aufweist. Dies wird beispielsweise dadurch erreicht, dass die Merkmale nicht nur in einem gemeinsamen (latenten) Merkmalsraum kombiniert werden, sondern dass die Merkmale in einem jeweiligen (latenten) Merkmalsraum für jede Ansicht, in der zumindest einer der voneinander verschiedenen Sensortypen die Umgebung der Robotervorrichtung erfasst, kombiniert werden, und indem zusätzlich für jede Ansicht jeweilige Objektkandidaten ermittelt werden und dann zu gemeinsamen Objektkandidaten kombiniert werden. Dadurch werden sowohl lokale als auch globale Merkmale der verschiedenen Sensortypen bei der Objekterkennung herangezogen, was die Objekterkennungsrate signifikant erhöht. Ferner ermöglicht das Verfahren eine robustere Objekterkennung, da, wenn beispielsweise ein Sensors mit einem der Sensortypen fehlerhaften Sensordaten liefert, diese anhand der anderen Sensordaten kompensiert werden können, so dass weiterhin eine hohe Objekterkennungsrate sichergestellt ist.

Verschiedene Aspekte betreffen ein Verfahren zur Objekterkennung in einer Umgebung einer Robotervorrichtung (z.B. eines zumindest teilweise automatisierten Fahrzeugs), das Verfahren aufweisend: Empfangen erster Sensordaten von mindestens einem ersten Sensor (z.B. einem Lidarsensor), welcher einen ersten Sensortyp zum Wahrnehmen der Umgebung der Robotervorrichtung in einer ersten Ansicht (z.B. Draufsicht, Vogelperspektive) aufweist; Empfangen zweiter Sensordaten von mindestens einem zweiten Sensor (z.B. einer Kamera), welcher einen von dem ersten Sensortyp verschiedenen zweiten Sensortyp zum Wahrnehmen der Umgebung der Robotervorrichtung in einer von der ersten Ansicht verschiedenen zweiten Ansicht (z.B. Perspektivansicht) aufweist; Eingeben der ersten Sensordaten in einen (dem ersten Sensortyp zugeordneten) ersten Encoder, um erste intra-sensortyp Merkmale in einem die erste Ansicht repräsentierenden ersten latenten Raum zu ermitteln; Eingeben der zweiten Sensordaten in einen (dem zweiten Sensortyp zugeordneten) zweiten Encoder, um zweite intra-sensortyp Merkmale in einem die zweite Ansicht repräsentierenden zweiten latenten Raum zu ermitteln; Ermitteln erster inter-sensortyp Merkmale, indem die zweiten intra-sensortyp Merkmale in den ersten latenten Raum projiziert werden; Ermitteln zweiter inter-sensortyp Merkmale, indem die ersten intra-sensortyp Merkmale in den zweiten latenten Raum projiziert werden; Fusionieren (z.B. Kombinieren) der ersten intra-sensortyp Merkmale und der ersten inter-sensortyp Merkmale in dem ersten latenten Raum, um erste Merkmale zu ermitteln; Fusionieren (z.B. Kombinieren) der zweiten intra-sensortyp Merkmale und der zweiten inter-sensortyp Merkmale in dem zweiten latenten Raum, um zweite Merkmale zu ermitteln; Ermitteln, mittels (mindestens) eines ersten Decoders, erster Objektkandidaten anhand der ersten Merkmale; Ermitteln, mittels (mindestens) eines zweiten Decoders, zweiter Objektkandidaten anhand der zweiten Merkmale; und Erkennen zumindest eines Objekts in der Umgebung der Robotervorrichtung unter Verwendung der ersten Objektkandidaten und der zweiten Objektkandidaten.

Im Folgenden werden verschiedene Ausführungsbeispiele angegeben.

Beispiel 1 ist ein Verfahren zur Objekterkennung in einer Umgebung einer Robotervorrichtung wie voranstehend beschrieben.

In Beispiel 2 kann das Verfahren gemäß Beispiel 1 optional ferner aufweisen: Ermitteln erster positionsbezogener Merkmale, indem jedem der ersten Merkmale eine jeweilige drei-dimensionale Position in der Umgebung in der Robotervorrichtung zugeordnet wird; Ermitteln zweiter positionsbezogener Merkmale, indem jedem der zweiten Merkmale eine jeweilige drei-dimensionale Position in der Umgebung in der Robotervorrichtung zugeordnet wird; und Erkennen des zumindest einen Objekts unter Verwendung der ersten positionsbezogenen Merkmale und der zweiten positionsbezogenen Merkmale.

Dadurch werden zusätzlich die Positionen der Merkmale berücksichtigt, wodurch die Objekterkennungsrate zusätzlich erhöht wird.

Beispiel 3 ist eingerichtet gemäß Beispiel 1 oder 2, wobei die ersten intra-sensortyp Merkmale und die ersten inter-sensortyp Merkmale unter Verwendung ein oder mehrerer Fensteraufmerksamkeitsblöcke fusioniert werden; und/oder wobei die zweiten intra-sensortyp Merkmale und die zweiten inter-sensortyp Merkmale unter Verwendung ein oder mehrerer Fensteraufmerksamkeitsblöcke fusioniert werden.

Beispiel 4 ist eingerichtet gemäß einem der Beispiele 1 bis 3, wobei das Fusionieren der ersten intra-sensortyp Merkmale und der ersten inter-sensortyp Merkmale aufweist: Eingeben der ersten intra-sensortyp Merkmale und der ersten inter-sensortyp Merkmale in ein oder mehrere erste Fensteraufmerksamkeitsblöcke, um erste Zwischenmerkmale zu ermitteln; Eingeben der ersten intra-sensortyp Merkmale und einer Verkettung der ersten intra-sensortyp Merkmale mit den ersten inter-sensortyp Merkmale in ein oder mehrere zweite Fensteraufmerksamkeitsblöcke, um zweite Zwischenmerkmale zu ermitteln; und Ermitteln der ersten Merkmale durch Kombinieren der ersten Zwischenmerkmale und der zweiten Zwischenmerkmale.

Beispiel 5 ist eingerichtet gemäß einem der Beispiele 1 bis 4, wobei das Fusionieren der zweiten intra-sensortyp Merkmale und der zweiten inter-sensortyp Merkmale aufweist: Eingeben der zweiten intra-sensortyp Merkmale und der zweiten inter-sensortyp Merkmale in ein oder mehrere erste Fensteraufmerksamkeitsblöcke, um erste Zwischenmerkmale zu ermitteln; Eingeben der zweiten intra-sensortyp Merkmale und einer Verkettung der zweiten intra-sensortyp Merkmale mit den zweiten inter-sensortyp Merkmale in ein oder mehrere zweite Fensteraufmerksamkeitsblöcke, um zweite Zwischenmerkmale zu ermitteln; und Ermitteln der zweiten Merkmale durch Kombinieren der ersten Zwischenmerkmale und der zweiten Zwischenmerkmale.

Beispiel 6 ist eingerichtet gemäß einem der Beispiele 1 bis 5', '4 bis 6, wobei die ein oder mehreren ersten Fensteraufmerksamkeitsblöcke einen Merkmale verschiebenden Fensteraufmerksamkeitsblock und einen Merkmale nicht verschiebenden Fensteraufmerksamkeitsblock aufweisen; und/oder wobei die ein oder mehreren zweiten Fensteraufmerksamkeitsblöcke einen Merkmale verschiebenden Fensteraufmerksamkeitsblock und einen Merkmale nicht verschiebenden Fensteraufmerksamkeitsblock aufweisen.

In den Beispielen 4 bis 6 erfassen die ein oder mehreren ersten Fensteraufmerksamkeitsblöcke einen lokalen Kontexte und die ein oder mehreren zweiten Fensteraufmerksamkeitsblöcke erfassen einen globalen Kontexte, so dass sowohl der lokale als auch der globale Kontext berücksichtigt werden.

In Beispiel 7 kann das Verfahren gemäß einem der Beispiele 1 bis 6 optional ferner aufweisen: Steuern der Robotervorrichtung unter Verwendung des erkannten zumindest einen Objekts.

Beispiel 8 ist eine Steuervorrichtung, die eingerichtet ist, das Verfahren gemäß Beispiel 7 auszuführen.

Beispiel 9 ist ein Verfahren zum (Vor-) Trainieren eines ersten Encoders und eines zweiten Encoders (z.B. des ersten Encoders und des zweiten Encoders gemäß einem der Beispiele 1 bis 7) für ein zur Objekterkennung eingerichtetes maschinelles Lernmodell, das Verfahren aufweisend: Erzeugen erster maskierter Sensordaten mittels Maskierens (nicht-gelabelter) erster Sensordaten, welche einem ersten Sensortyp (z.B. einem Lidarsensor) zugeordnet sind und die Umgebung der Robotervorrichtung in einer ersten Ansicht (z.B. Draufsicht, Vogelperspektive) repräsentieren; Erzeugen zweiter maskierter Sensordaten mittels Maskierens (nicht-gelabelter) zweiter Sensordaten, welche einem von dem ersten Sensortyp verschiedenen zweiten Sensortyp (z.B. einer Kamera) zugeordnet sind und die Umgebung der Robotervorrichtung in einer von der ersten Ansicht verschiedenen zweiten Ansicht (z.B. Perspektivansicht) repräsentieren; Eingeben der ersten maskierten Sensordaten in den (dem ersten Sensortyp zugeordneten) ersten Encoder, um erste intra-sensortyp Merkmale in einem die erste Ansicht repräsentierenden ersten latenten Raum zu ermitteln; Eingeben der zweiten maskierten Sensordaten in den (dem zweiten Sensortyp zugeordneten) zweiten Encoder, um zweite intra-sensortyp Merkmale in einem die zweite Ansicht repräsentierenden zweiten latenten Raum zu ermitteln; Ermitteln erster inter-sensortyp Merkmale, indem die zweiten intra-sensortyp Merkmale in den ersten latenten Raum projiziert werden; Ermitteln zweiter inter-sensortyp Merkmale, indem die ersten intra-sensortyp Merkmale in den zweiten latenten Raum projiziert werden; Fusionieren (z.B. Kombinieren) der ersten intra-sensortyp Merkmale und der ersten inter-sensortyp Merkmale in dem ersten latenten Raum, um erste Merkmale zu ermitteln; Fusionieren (z.B. Kombinieren) der zweiten intra-sensortyp Merkmale und der zweiten inter-sensortyp Merkmale in dem zweiten latenten Raum, um zweite Merkmale zu ermitteln; Ermitteln erster rekonstruierter Sensordaten, indem die ersten Merkmale mittels (mindestens) eines ersten Decoders rekonstruiert werden; Ermitteln zweiter rekonstruierter Sensordaten, indem die zweiten Merkmale mittels (mindestens) eines zweiten Decoders rekonstruiert werden; Trainieren des ersten Encoders basierend auf einem Vergleich der ersten rekonstruierten Sensordaten mit den ersten Sensordaten; und Trainieren des zweiten Encoders basierend auf einem Vergleich der zweiten rekonstruierten Sensordaten mit den zweiten Sensordaten.

Das Verfahren ermöglicht das Vortrainieren eines maschinellen Lernmodells zur Objektdetektion. Hierbei wird die Objekterkennungsrate insbesondere für Sensordaten, welche spärliche Informationen aufweisen (z.B. im Falle spärlicher Lidardaten), signifikant erhöht. Das Vortrainieren kann anhand nicht-gelabelter Sensordaten erfolgen, wodurch für das Erreichen einer gleichen Objekterkennungsrate beim anschließenden Trainieren weniger gelabelte Sensordaten benötigt werden. Folglich verringern diese Verfahren den Aufwand (z.B. Zeitaufwand, Kostenaufwand, etc.) zum Trainieren des maschinellen Lernmodells. Auch wird durch das Vortrainieren eine verbesserte Objekterkennungsrate im Falle von Sensorfehlern (z.B. einem Sensorausfall) erreicht.

In Beispiel 10 kann das Verfahren gemäß Beispiel 9 optional ferner aufweisen: Hinzufügen von erstem (Gaußschen) Rauschen zu den ersten maskierten Sensordaten bevor diese in den ersten Encoder eingegeben werden; Hinzufügen von zweitem (Gaußschen) Rauschen zu den zweiten maskierten Sensordaten bevor diese in den zweiten Encoder eingegeben werden; Ermitteln eines ersten vorhergesagten Rauschens unter Verwendung der ersten Merkmale; und Ermitteln eines zweiten vorhergesagten Rauschens unter Verwendung der zweiten Merkmale; wobei der erste Encoder basierend auf einem Vergleich des ersten vorhergesagten Rauschens mit dem ersten Rauschen trainiert wird und wobei der zweite Encoder basierend auf einem Vergleich des zweiten vorhergesagten Rauschens mit dem zweiten Rauschen trainiert wird.

Dadurch lernt der jeweilige Encoder in den erzeugten Merkmalen Details, Oberflächenvariationen, etc. einzubeziehen.

In Beispiel 11 kann das Verfahren gemäß Beispiel 9 oder 10 optional ferner aufweisen: Vorhersagen, unter Verwendung der zweiten Merkmale, einer ersten charakteristischen Eigenschaft (z.B. von Tiefenwerten) der ersten Sensordaten (z.B. einer Lidar-Punktwolke); Vorhersagen, unter Verwendung der ersten Merkmale, einer zweiten charakteristischen Eigenschaft (z.B. von Bildpunktwerten) der zweiten Sensordaten (z.B. eines Kamerabildes); wobei der zweite Encoder basierend auf einem Vergleich der vorhergesagten ersten charakteristischen Eigenschaft mit der ersten charakteristischen Eigenschaft trainiert wird und wobei der erste Encoder basierend auf einem Vergleich der vorhergesagten zweiten charakteristischen Eigenschaft mit der zweiten charakteristischen Eigenschaft trainiert wird.

Beispielsweise können die ersten Sensordaten die erste charakteristische Eigenschaft besonders gut vorhersagen und die zweiten Sensordaten können die zweite charakteristische Eigenschaft besonders gut vorhersagen. Die ersten Sensordaten können allerdings gewisse Informationen bezüglich der zweiten charakteristischen Eigenschaft aufweisen und die zweiten Sensordaten können gewisse Informationen bezüglich der ersten charakteristischen Eigenschaft aufweisen. Beispiel 11 ermöglicht, den ersten Encoder darauf zu trainieren, diese Informationen bezüglich der zweiten charakteristischen Eigenschaft in den erzeugten Merkmalen zu berücksichtigen, und entsprechend kann der zweite Encoder darauf trainiert werden, die Informationen bezüglich der ersten charakteristischen Eigenschaft in den erzeugten Merkmalen zu berücksichtigen. Dadurch können diese Eigenschaften auch dann bei der Objekterkennung berücksichtigt werden, wenn der erste Sensor und/oder der zweite Sensor fehlerhafte Sensordaten ausgibt (z.B. aufgrund einer teilweisen Abdeckung, eines Ausfalls, etc.).

Beispiel 12 ist ein Verfahren zum (Vor-) Trainieren eines ersten Encoders und eines zweiten Encoders (z.B. des ersten Encoders und des zweiten Encoders gemäß einem der Beispiele 1 bis 7) für ein zur Objekterkennung eingerichtetes maschinelles Lernmodell, das Verfahren aufweisend: Erzeugen erster maskierter Sensordaten mittels Maskierens (nicht-gelabelter) erster Sensordaten, welche einem ersten Sensortyp (z.B. einem Lidarsensor) zugeordnet sind und die Umgebung der Robotervorrichtung in einer ersten Ansicht (z.B. Draufsicht, Vogelperspektive) repräsentieren; Erzeugen zweiter maskierter Sensordaten mittels Maskierens (nicht-gelabelter) zweiter Sensordaten, welche einem von dem ersten Sensortyp verschiedenen zweiten Sensortyp (z.B. einer Kamera) zugeordnet sind und die Umgebung der Robotervorrichtung in einer von der ersten Ansicht verschiedenen zweiten Ansicht (z.B. Perspektivansicht) repräsentieren; Hinzufügen von erstem (Gaußschen) Rauschen zu den ersten maskierten Sensordaten und Eingeben in den (dem zweiten Sensortyp zugeordneten) ersten Encoder, um erste intra-sensortyp Merkmale in einem die erste Ansicht repräsentierenden ersten latenten Raum zu ermitteln; Hinzufügen von zweitem (Gaußschen) Rauschen zu den zweiten maskierten Sensordaten und Eingeben in den (dem zweiten Sensortyp zugeordneten) zweiten Encoder, um zweite intra-sensortyp Merkmale in einem die zweite Ansicht repräsentierenden zweiten latenten Raum zu ermitteln; Ermitteln erster inter-sensortyp Merkmale, indem die zweiten intra-sensortyp Merkmale in den ersten latenten Raum projiziert werden; Ermitteln zweiter inter-sensortyp Merkmale, indem die ersten intra-sensortyp Merkmale in den zweiten latenten Raum projiziert werden; Fusionieren (z.B. Kombinieren) der ersten intra-sensortyp Merkmale und der ersten inter-sensortyp Merkmale in dem ersten latenten Raum, um erste Merkmale zu ermitteln; Fusionieren (z.B. Kombinieren) der zweiten intra-sensortyp Merkmale und der zweiten inter-sensortyp Merkmale in dem zweiten latenten Raum, um zweite Merkmale zu ermitteln; Ermitteln eines ersten vorhergesagten Rauschens unter Verwendung der ersten Merkmale; und Ermitteln eines zweiten vorhergesagten Rauschens unter Verwendung der zweiten Merkmale; Trainieren des ersten Encoders basierend auf einem Vergleich des ersten vorhergesagten Rauschens mit dem ersten Rauschen; und Trainieren des zweiten Encoders basierend auf einem Vergleich des zweiten vorhergesagten Rauschens mit dem zweiten Rauschen.

Beispiel 13 ist ein Verfahren zum (Vor-) Trainieren eines ersten Encoders und eines zweiten Encoders (z.B. des ersten Encoders und des zweiten Encoders gemäß einem der Beispiele 1 bis 7) für ein zur Objekterkennung eingerichtetes maschinelles Lernmodell, das Verfahren aufweisend: Empfangen (nicht-gelabelter) erster Sensordaten, welche einem ersten Sensortyp (z.B. einem Lidarsensor) zugeordnet sind und die Umgebung der Robotervorrichtung in einer ersten Ansicht (z.B. Draufsicht, Vogelperspektive) repräsentieren; Empfangen (nicht-gelabelter) zweiter Sensordaten, welche einem von dem ersten Sensortyp verschiedenen zweiten Sensortyp (z.B. einer Kamera) zugeordnet sind und die Umgebung der Robotervorrichtung in einer von der ersten Ansicht verschiedenen zweiten Ansicht (z.B. Perspektivansicht) repräsentieren; Eingeben der ersten Sensordaten in den (dem ersten Sensortyp zugeordneten) ersten Encoder, um erste intra-sensortyp Merkmale in einem die erste Ansicht repräsentierenden ersten latenten Raum zu ermitteln; Eingeben der zweiten Sensordaten in den (dem zweiten Sensortyp zugeordneten) zweiten Encoder, um zweite intra-sensortyp Merkmale in einem die zweite Ansicht repräsentierenden zweiten latenten Raum zu ermitteln; Ermitteln erster inter-sensortyp Merkmale, indem die zweiten intra-sensortyp Merkmale in den ersten latenten Raum projiziert werden; Ermitteln zweiter inter-sensortyp Merkmale, indem die ersten intra-sensortyp Merkmale in den zweiten latenten Raum projiziert werden; Fusionieren (z.B. Kombinieren) der ersten intra-sensortyp Merkmale und der ersten inter-sensortyp Merkmale in dem ersten latenten Raum, um erste Merkmale zu ermitteln; Fusionieren (z.B. Kombinieren) der zweiten intra-sensortyp Merkmale und der zweiten inter-sensortyp Merkmale in dem zweiten latenten Raum, um zweite Merkmale zu ermitteln; Vorhersagen, unter Verwendung der zweiten Merkmale, einer ersten charakteristischen Eigenschaft (z.B. von Tiefenwerten) der ersten Sensordaten (z.B. einer Lidar-Punktwolke); Vorhersagen, unter Verwendung der ersten Merkmale, einer zweiten charakteristischen Eigenschaft (z.B. von Bildpunktwerten) der zweiten Sensordaten (z.B. eines Kamerabildes); Trainieren des zweiten Encoders basierend auf einem Vergleich der vorhergesagten ersten charakteristischen Eigenschaft mit der ersten charakteristischen Eigenschaft; und Trainieren des ersten Encoders basierend auf einem Vergleich der vorhergesagten zweiten charakteristischen Eigenschaft mit der zweiten charakteristischen Eigenschaft.

In Beispiel 14 kann das Verfahren gemäß einem der Beispiele 9 bis 13', '1 bis 7 optional ferner aufweisen: Trainieren eines maschinellen Lernmodells, welches zur Objekterkennung gemäß einem der Ansprüche 1 bis 7 eingerichtet ist und den ersten Encoder und den zweiten Encoder aufweist, unter Verwendung gelabelter (erster und zweiter) Sensordaten.

Beispiel 15 ist eine Datenverarbeitungseinheit, die eingerichtet ist, das Verfahren gemäß einem der Beispiele 9 bis 14 auszuführen.

Beispiel 16 ist eine Robotervorrichtung, welche die Steuervorrichtung gemäß Beispiel 8 aufweist.

Beispiel 17 ist ein Computerprogramm mit Befehlen, die, wenn sie durch einen Prozessor ausgeführt werden, bewirken, dass der Prozessor das Verfahren gemäß einem der Beispiele 1 bis 7 oder 9 bis 14 durchführt.

Beispiel 18 ist ein computerlesbares Medium, das Befehle speichert, die, wenn sie durch einen Prozessor ausgeführt werden, bewirken, dass der Prozessor das Verfahren gemäß einem der Beispiele 1 bis 7 oder 9 bis 14 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.

Figur 1 zeigt ein zumindest teilweise automatisiertes Fahrzeug gemäß verschiedenen Aspekten;
Figure 2 zeigt ein Ablaufdiagramm eines Verfahrens zur Objekterkennung in einer Umgebung einer Robotervorrichtung gemäß verschiedenen Aspekten;
Figur 3 zeigt verschiedene Aspekte des Verfahrens in einem schematischen Ablaufdiagramm;
Figuren 4A und 4B zeigen verschiedene Aspekte des Fusionierens von intra-sensortyp Merkmalen mit inter-sensortyp Merkmalen; und
Figur 5 zeigt ein Ablaufdiagramm eines Verfahrens zum Vortrainieren verschiedener Komponenten eines maschinellen Lernmodells, welches zur Objekterkennung in einer Umgebung einer Robotervorrichtung eingerichtet ist, gemäß verschiedenen Aspekten.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

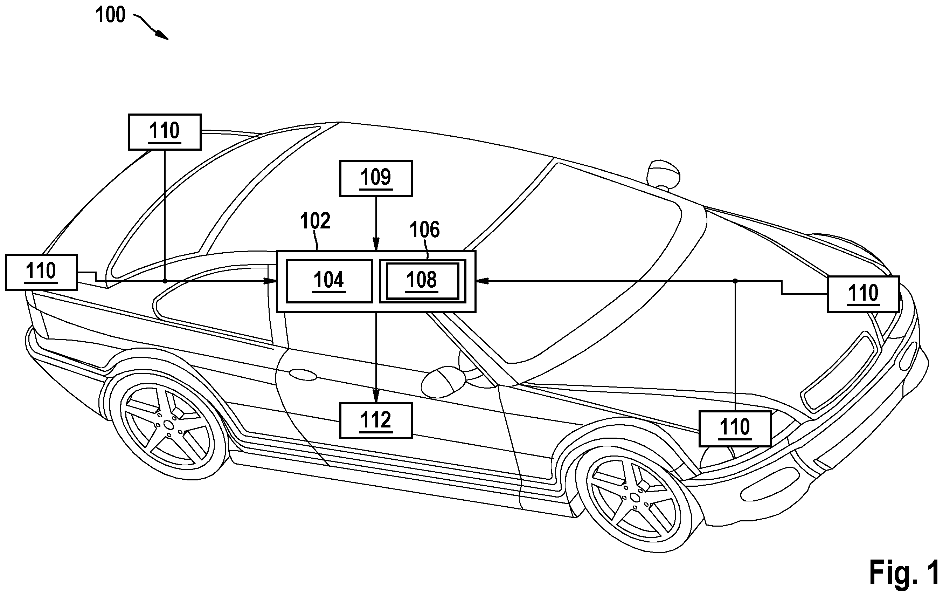

**FIG.1** zeigt ein zumindest teilweise automatisiertes Fahrzeug 100 gemäß verschiedenen Aspekten. Das in FIG.1 gezeigte und hierin zur Veranschaulichung beschriebene zumindest teilweise automatisierte Fahrzeug 100 ist eine beispielhafte computergesteuerte Vorrichtung. Obgleich hierin verschiedene Aspekte des computerimplementierten Verfahrens mit Bezug auf das Fahrzeug 100 beschrieben werden, wird verstanden, dass dies der Veranschaulichung dient und dass jede andere Art von computergesteuerter Vorrichtung das computerimplementierte Verfahren verwenden kann. Eine andere computergesteuerte Vorrichtung kann beispielsweise eine Robotervorrichtung (kurz: Roboter), wie beispielsweise ein Industrieroboter (z.B. in der Form eines Roboterarms zum Bewegen, Montieren oder Bearbeiten eines Werkstücks, zum Entnehmen von Behältern usw.), ein Fertigungsroboter, ein Wartungsroboter, ein Haushaltsroboter, ein Medizinroboter, ein Haushaltsgerät, eine Produktionsmaschine, ein persönlicher Assistent, ein Zugangs-Steuerungs-System etc., sowie jede andere Art von Robotervorrichtung sein.

Zur Steuerung des Fahrzeugs 100 kann das Fahrzeug 100 eine (Fahrzeug-) Steuervorrichtung 102 aufweisen, die eingerichtet ist, eine Interaktion des Fahrzeugs 100 mit dessen Umgebung gemäß einem Steuerungsprogramm zu realisieren. Der Begriff "Steuervorrichtung" kann als jede Art von logischer Implementierungseinheit verstanden werden, die beispielsweise eine Schaltung und/oder einen Prozessor beinhalten kann, der in der Lage ist, in einem Speichermedium gespeicherte Software, Firmware oder eine Kombination derselben auszuführen, und die Anweisungen, z.B. an ein Stellglied im vorliegenden Beispiel, erteilen kann. Die Steuervorrichtung kann beispielsweise durch Programmcode (z.B. Software) eingerichtet werden, den Betrieb eines Systems, im vorliegenden Beispiel eines Roboters, zu steuern.

In dem vorliegenden Beispiel kann die Steuervorrichtung 102 einen Computer 104 und einen Speicher 106, der Code und Daten speichert, auf deren Grundlage der Computer 104 das Fahrzeug 100 steuert, aufweisen. Gemäß verschiedenen Aspekten kann die Steuervorrichtung 102 das Fahrzeug 100 basierend auf einem in dem Speicher 106 gespeicherten Steuerungsmodell 108 steuern.

In einer Ausführungsform kann ein "Computer" als jede Art von Logik-implementierender Entität verstanden werden, welche Hardware, Software, Firmware oder eine Kombination davon sein kann. Daher kann in einer Ausführungsform ein "Computer" eine hartverdrahtete Logikschaltung oder eine programmierbare Logikschaltung, wie beispielsweise ein programmierbarer Prozessor, zum Beispiel ein Mikroprozessor (z.B. ein CISC (Prozessor mit großem Befehlsvorrat) oder ein RISC (Prozessor mit reduziertem Befehlsvorrat)), sein. Ein "Computer" kann auch Software sein, die von einem Prozessor implementiert bzw. ausgeführt wird, zum Beispiel jede Art von Computerprogramm, zum Beispiel ein Computerprogramm das einen virtuellen Maschinencode, wie beispielsweise Java, verwendet. Jede andere Art der Implementierung der jeweiligen Funktionen, die im Folgenden ausführlicher beschrieben werden, kann in Übereinstimmung mit einer alternativen Ausführungsform als ein "Computer" verstanden werden.

Um eine Fahraufgabe des Fahrzeugs 100 steuern zu können, kann die Steuervorrichtung 102 Sensordaten verwenden, welche eine Umgebung des Fahrzeugs 100 repräsentieren. Hierzu kann das Fahrzeug 100 mehrere Sensoren 109, 110 aufweisen, von denen jeder Sensor jeweilige Sensordaten bereitstellen kann, welche zumindest einen Teil der Umgebung des Fahrzeugs 100 repräsentieren. Ein Sensor der mehreren Sensoren 109, 110 kann beispielsweise ein Bildgebungssensor und/oder ein Näherungssensor (engl.: proximity sensor) sein, wie zum Beispiel eine Kamera (z.B. eine Standardkamera, eine Digitalkamera, eine Infrarotkamera, eine Stereokamera, etc.), ein Radar-Sensor, ein Lidarsensor, ein Ultraschallsensor, etc. sein. Ein Sensor der mehreren Sensoren 109, 110 kann eingerichtet sein, ein Bild zu erfassen, welches zumindest einen Teil der Umgebung des Fahrzeuges 100 zeigt. Ein Bild kann ein RGB-Bild, ein RGB-D-Bild oder ein Tiefenbild (auch als D-Bild bezeichnet) sein. Ein hierin beschriebenes Tiefenbild kann jede Art von Bild sein, das Tiefeninformationen aufweist. Anschaulich kann ein Tiefenbild 3-dimensionale Informationen zu ein oder mehreren Objekten in der Umgebung des Fahrzeugs 100 aufweisen. Ein hierin beschriebenes Tiefenbild kann zum Beispiel eine Punktwolke aufweisen, die von einem Lidarsensor und/oder einem Radar-Sensor bereitgestellt wird. Ein Tiefenbild kann zum Beispiel ein von einem Lidarsensor bereitgestelltes Bild mit Tiefeninformationen sein. Gemäß verschiedenen Aspekten kann das Fahrzeug 100 mindestens einen Lidarsensor 109 und mindestens eine Kamera 110 aufweisen. Es wird verstanden, dass das Fahrzeug 100 ferner andere Sensoren aufweisen kann, wie beispielsweise ein Globales-Navigations-Satelliten-System (GNSS, z. B. Globales-Positionierungs-System, GPS), einen Geschwindigkeitssensor, einen Beschleunigungssensor, einen Höhenmesssensor, ein Gyroskop, usw., und die Steuervorrichtung 102 kann auch Sensordaten, die von diesen anderen Sensoren bereitgestellt werden, zur Steuerung des Fahrzeugs 100 verwenden. Die Steuervorrichtung 102 kann eingerichtet sein, das Fahrzeug 100 in Reaktion auf eine Eingabe der Sensordaten in das Steuerungsmodell 108 auf der Grundlage einer Ausgabe des Steuerungsmodells 108 zu steuern. Das Steuerungsmodell 108 kann hierbei ein maschinelles Lernmodell zur Erkennung von Objekten in der Umgebung des Fahrzeugs 100 aufweisen und kann eine Fahraufgabe in Abhängigkeit der erkannten Objekte steuern.

Das Fahrzeug 100 kann eine Antriebsvorrichtung 112 zum Antreiben des Fahrzeugs 100 aufweisen. Die Steuervorrichtung 102 kann eingerichtet sein, unter Verwendung einer Ausgabe des Steuerungsmodells 108 einen Steuerparameter zum Steuern des Fahrzeugs 100 zu ermitteln. Die Steuervorrichtung 102 kann eingerichtet sein, einen Betrieb des Fahrzeugs 100 (z. B. durch Steuern der Antriebsvorrichtung 112 mittels eines Steuersignals) gemäß den Steuerparametern zu steuern.

Das zumindest teilweise automatisierte Fahrzeug 100 kann ein automatisiertes Fahrzeug oder ein autonomes Fahrzeug sein. Ein Autonomie-Level eines Fahrzeugs kann durch ein SAE (Society of Automotive Engineers) Level (z.B. wie in SAE J3016 definiert) ermittelt oder angegeben werden. Zum Beispiel kann das zumindest teilweise automatisierte Fahrzeug 100 ein teilautomatisiertes Fahrzeug (gemäß SAE-Level 2), ein hochautomatisiertes Fahrzeug (gemäß SAE-Level 3), ein vollautomatisiertes Fahrzeug (gemäß SAE-Level 4) oder ein autonomes Fahrzeug (gemäß SAE-Level 5) sein.

Ein zumindest teilweise automatisiertes Fahrzeug kann allgemein Fahraufgaben autonom übernehmen. Um die Sicherheit von Insassen und anderen Verkehrsteilnehmern (z. B. Radfahrern, Fußgängern, etc.) zu gewährleisten, ist es für solche Systeme, die autonom Fahraufgaben übernehmen, erforderlich, hohe Sicherheitsanforderungen zu gewährleisten. Hierfür ist eine hohe Objekterkennungsrate von entscheidender Bedeutung. Ferner ist es zur Gewährleistung der Sicherheit ebenfalls entscheidend, eine hohe Robustheit sicherzustellen, also dass auch bei einem Ausfall eines Sensors die Objekterkennung sichergestellt ist.

Die hierin beschriebene Objekterkennung kann eine Erkennung von dreidimensionalen (3D) Objekten sein (auch als 3D Objekterkennung bezeichnet). Unter einer Objekterkennung kann ein Identifizieren einer Objektart eines jeweiligen Objekts und ein Lokalisieren des jeweiligen Objekts verstanden werden.

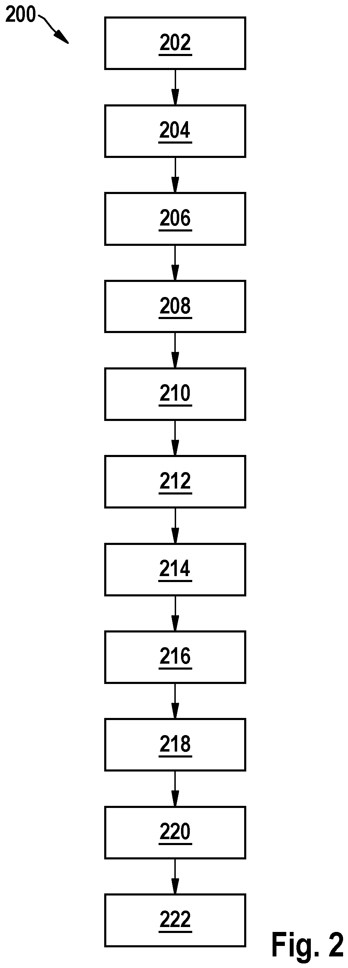

**FIG.2** zeigt ein Ablaufdiagramm eines (computerimplementierten) Verfahrens 200 zum Erkennen zumindest eines Objekts (also zur Objekterkennung) in einer Umgebung einer Robotervorrichtung (wie beispielsweise des Fahrzeugs 100) gemäß verschiedenen Aspekten.

Das Verfahren 200 kann (in 202) ein Empfangen erster Sensordaten von mindestens einem ersten Sensor (z.B. dem mindestens einen Lidarsensor 109), welcher einen ersten Sensortyp zum Wahrnehmen der Umgebung der Robotervorrichtung in einer ersten Ansicht (z.B. Draufsicht, Vogelperspektive) aufweist, aufweisen.

Das Verfahren 200 kann (in 204) ein Empfangen zweiter Sensordaten von mindestens einem zweiten Sensor (z.B. der mindestens einen Kamera 110), welcher einen von dem ersten Sensortyp verschiedenen zweiten Sensortyp zum Wahrnehmen der Umgebung der Robotervorrichtung in einer von der ersten Ansicht verschiedenen zweiten Ansicht (z.B. Perspektivansicht) aufweist, aufweisen.

Das Verfahren 200 kann (in 206) ein Eingeben der ersten Sensordaten in einen (dem ersten Sensortyp zugeordneten) ersten Encoder aufweisen, um erste intra-sensortyp Merkmale in einem die erste Ansicht repräsentierenden ersten latenten Raum zu ermitteln.

Das Verfahren 200 kann (in 208) ein Eingeben der zweiten Sensordaten in einen (dem zweiten Sensortyp zugeordneten) zweiten Encoder aufweisen, um zweite intra-sensortyp Merkmale in einem die zweite Ansicht repräsentierenden zweiten latenten Raum zu ermitteln.

Das Verfahren 200 kann (in 210) ein Ermitteln erster inter-sensortyp Merkmale aufweisen, indem die zweiten intra-sensortyp Merkmale in den ersten latenten Raum projiziert werden.

Das Verfahren 200 kann (in 212) ein Ermitteln zweiter inter-sensortyp Merkmale aufweisen, indem die ersten intra-sensortyp Merkmale in den zweiten latenten Raum projiziert werden.

Das Verfahren 200 kann (in 214) ein Fusionieren (z.B. Kombinieren) der ersten intra-sensortyp Merkmale und der ersten inter-sensortyp Merkmale in dem ersten latenten Raum aufweisen, um erste Merkmale zu ermitteln.

Das Verfahren 200 kann (in 216) ein Fusionieren (z.B. Kombinieren) der zweiten intra-sensortyp Merkmale und der zweiten inter-sensortyp Merkmale in dem zweiten latenten Raum aufweisen, um zweite Merkmale zu ermitteln.

Das Verfahren 200 kann (in 218) ein Ermitteln, mittels (mindestens) eines ersten Decoders, erster Objektkandidaten anhand der ersten Merkmale aufweisen.

Das Verfahren 200 kann (in 220) ein Ermitteln, mittels (mindestens) eines zweiten Decoders, zweiter Objektkandidaten anhand der zweiten Merkmale aufweisen.

Das Verfahren 200 kann (in 222) ein Erkennen zumindest eines Objekts in der Umgebung der Robotervorrichtung unter Verwendung der ersten Objektkandidaten und der zweiten Objektkandidaten aufweisen.

Anschaulich können die ersten Sensordaten und die zweiten Sensordaten sowohl in dem ersten latenten Raum als auch in dem zweiten latenten Raum miteinander kombiniert werden und für die kombinierten Merkmale des ersten latenten Raums und des zweiten latenten Raums können jeweils Objektkandidaten ermittelt werden, welche dann wiederum miteinander zu gemeinsamen Objektkandidaten kombiniert werden. Folglich werden die ersten Sensordaten und die zweiten Sensordaten sowohl auf Merkmalsebene als auch auf Objektkandidaten-Ebene miteinander kombiniert.

Im Folgenden werden verschiedene Aspekte des Verfahren 200 detaillierter beschrieben. Zur Veranschaulichung werden hierbei die ersten Sensordaten als Lidardaten (z.B. erfasst mittels des mindestens einen Lidarsensors 109) und die zweiten Sensordaten als Kameradaten (z.B. erfasst mittels der mindestens einen Kamera 110) beschrieben. Es wird verstanden, dass dies der Veranschaulichung dient und dass die ersten Sensordaten und die zweiten Sensordaten von jedem Typ von Sensor (also Sensortyp) erfasst werden können, der imstande ist, eine Umgebung einer Robotervorrichtung wahrzunehmen, solange die die ersten Sensordaten und die zweiten Sensordaten voneinander verschiedene Ansichten repräsentieren.

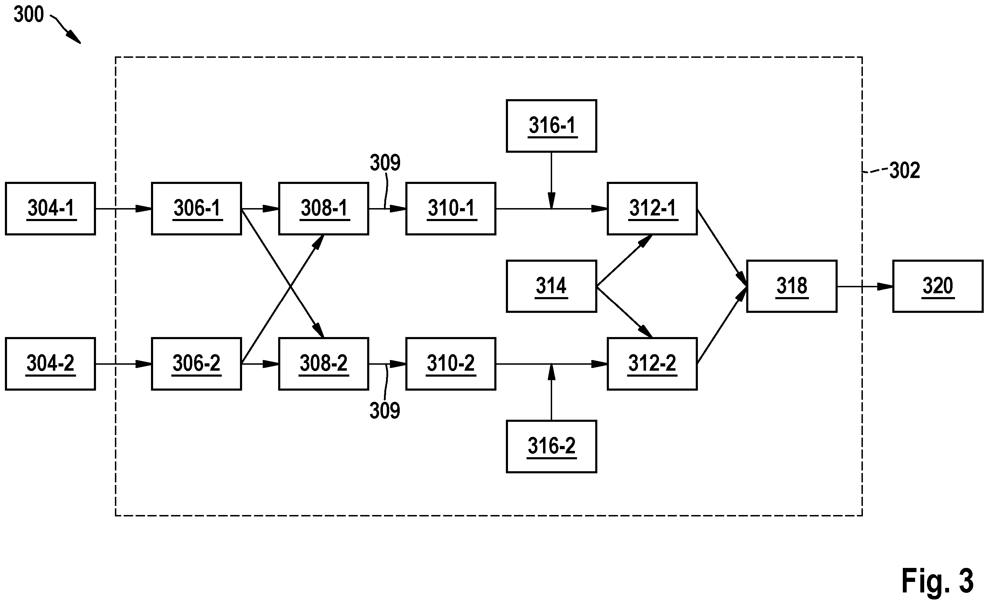

**FIG.3** zeigt verschiedene Aspekte des Verfahrens 200 in einem schematischen Ablaufdiagramm 300. Hierbei können die mittels des mindestens einen Lidarsensors 109 erfassten Lidardaten 304-1 (als erste Sensordaten) und die mittels der mindestens einen Kamera 110 erfassten Kameradaten 304-2 einem zur Objekterkennung eingerichteten maschinellen Lernmodell 302 zugeführt werden. Das maschinelle Lernmodell 302 kann eingerichtet sein, in Reaktion auf die Eingabe der Lidardaten 304-1 und der Kameradaten 304-2 zumindest ein Objekt 320 (z.B. mehrere Objekte) in der Umgebung des Fahrzeugs 100 zu erkennen.

Die hierin beschriebenen Kameradaten 304-2 können Bilder von einer Kamera 110 oder Bilder von mehreren Kameras 110 aufweisen. Hierbei können die mehreren Kameras 110 voneinander verschiedene Ausrichtungen haben, also jeweilige (z.B. teilweise überlappende) Sichtfelder der Umgebung des Fahrzeugs 100 haben. Es wird verstanden, dass jede Kamera in deren Sichtfeld Bilder in Perspektivansicht erfasst.

Ein erster Encoder 306-1 kann die Lidardaten 304-1 auf intra-Lidar-Merkmale $F_{1\_bev}$ (also intra-sensortyp Merkmale des Lidarsensors) in einen ersten (latenten) Merkmalsraum 308-1 (auch als erster latenter Raum bezeichnet) abbilden. Der erste Merkmalsraum 308-1 kann folglich die Draufsicht (engl.: bird eye view, BEV) auf die Umgebung des Fahrzeugs 100 repräsentieren. Die Kameradaten 304-2 können in einen zweiten Encoder 306-2 eingegeben werden, um intra-Kamera-Merkmale $F_{c\text{-}pv}$ (also intra-sensortyp Merkmale der Kamera) in einem zweiten (latenten) Merkmalsraum 308-2 (auch als zweiter latenter Raum bezeichnet) zu ermitteln. Der zweite Merkmalsraum 308-2 kann die Perspektivansicht (PV) auf die Umgebung des Fahrzeugs 100 repräsentieren.

Gemäß verschiedenen Aspekten können die intra-Lidar-Merkmale $F_{1\_bev}$ in den zweiten Merkmalsraum 308-2 projiziert ($\mathcal{M}_{BEV}$) werden, um inter-Kamera-Merkmale $F_{1\_pv}$ (also inter-sensortyp Merkmale) zu ermitteln ($F_{1\_pv} = \mathcal{M}_{BEV \to PV}$ ($F_{1\_bev}$)). Die inter-Kamera-Merkmale $F_{1\_pv}$ können daher Merkmale in dem Kamera-zugehörigen Merkmalsraum (PV) sein, welche anhand der Lidardaten (I) 304-1 ermittelt werden. Für das Abbilden ($\mathcal{M}_{BEV}$) der intra-Lidar-Merkmale $F_{1\_bev}$ in den Kamera-zugehörigen Merkmalsraum (PV) kann für jeden Punkt ($i_b,j_b$) im Lidar-zugehörigen Merkmalsraum (BEV) eine zugehörige (räumliche) Position (x, y) ermittelt werden. Anschließend kann die z-Koordinate ermittelt werden, die diesen (x,y)-Positionen entspricht. Unter Verwendung der extrinsischen und intrinsischen Kameraparameter der mindestens einen Kamera 109 kann der so für einen Punkt ($i_b,j_b$) im Lidar-zugehörigen Merkmalsraum (BEV) ermittelte zugehörige ($x,y,z$)-Punkt in den Koordinatenraum der Kamera (zu einem Punkt ($i_c,j_c$)) projiziert werden und die intra-Lidar-Merkmale $F_{1\_bev}$ können dann von Rasterabtastens vom BEV-Raum auf den PV-Raum übertragen werden.

Entsprechend können die intra-Kamera-Merkmale $F_{c\text{-}pv}$ in den ersten Merkmalsraum 308-1 projiziert ($\mathcal{M}_{PV}$) werden, um inter-Lidar-Merkmale $F_{c\_bev}$ (also inter-sensortyp Merkmale) zu ermitteln ($F_{c\_bev} = \mathcal{M}_{PV \to BEV}$ ($F_{c\text{-}pv}$)). Die inter-Lidar-Merkmale $F_{c\_bev}$ können daher Merkmale in dem Lidar-zugehörigen Merkmalsraum (BEV) sein, welche anhand der Kameradaten 304-2 (c) ermittelt werden. Für das Abbilden ($\mathcal{M}_{PV}$) der intra-Kamera-Merkmale $F_{c\text{-}pv}$ in den Lidar-zugehörigen Merkmalsraum (BEV) kann eine 2D-zu-3D-Ansichtsprojektion durchgeführt werden, um Kamera-BEV-Merkmale aus Kamera-PV-Merkmalen zu konstruieren. Bei dieser Ansichtsprojektion kann eine Tiefe vorhergesagt werden. Unter Verwendung der extrinsischen Kameraparameter und der vorhergesagten Tiefe können die Merkmale in eine vordefinierte Punktwolke transformiert werden, um ein Pseudo-Voxel-Gitter mit Voxel-Merkmalen zu erhalten, welche in den BEV-Raum-Merkmale codiert werden.

Das maschinelle Lernmodell 302 kann einen Fusionsabschnitt 309 zum Kombinieren von intra-sensortyp Merkmalen mit inter-sensortyp Merkmalen eines gemeinsamen Merkmalraums aufweisen (hierin auch als Intra-Inter-Fusion, IIF, bezeichnet). In dem Fusionsabschnitt 309 können die intra-Lidar-Merkmale $F_{1\_bev}$ und die inter-Lidar-Merkmale $F_{c\_bev}$ zu ersten Merkmalen 310-1 $F_{bev}$ (in dem BEV-zugehörigen ersten Merkmalsraum) fusioniert (z.B. kombiniert) werden ($F_{bev} = IIF(F_{l\text{-}bev}, F_{c\_bev})$ a). Entsprechend können die intra-Kamera-Merkmale $F_{c\text{-}pv}$ und die inter-Kamera-Merkmale $F_{1\_pv}$ zu zweiten Merkmalen 310-2 $F_{pv}$ (in dem PV-zugehörigen zweiten Merkmalsraum) fusioniert (z.B. kombiniert) werden ($F_{pv} = IIF(F_{c\_pv}, F_{l\_pv})$).

Anschaulich werden die Merkmale der Lidardaten 304-1 und die Merkmale der Kameradaten 304-2 sowohl in dem Lidar-zugehörigen Merkmalsraum als auch dem Kamera-zugehörigen Merkmalsraum miteinander kombiniert. Dadurch werden sowohl Lidar-spezifische Details als auch Kamera-spezifische Details der Umgebung des Fahrzeugs 100 erhalten. So kann ein Lidarsensor beispielsweise Distanzen deutlich besser erfassen als eine Kamera, wohingegen eine Kamera das Erfassen eines jeweiligen Farbwertes eines Bildpunktes ermöglicht, was wiederum Aussagen über andere Eigenschaften, wie beispielsweise eine Oberfläche eines Objekts ermöglicht. Auch können Lidardaten Informationen über verdeckte Objekte aufweisen und Kameradaten können Informationen über eine geometrische Eigenschaften (z.B. eine Höhe) von Objekten aufweisen.

Es wird verstanden, dass dies der Veranschaulichung dient und dass jeder Sensortyp Vor- und Nachteile gegenüber anderen Sensortypen haben kann.

Hierin kann eine charakteristische Eigenschaft von Sensordaten als eine Eigenschaft verstanden werden, welche mittels des zugehörigen Sensortyps vorteilhafter als mit anderen Sensortypen ermittelt werden kann.

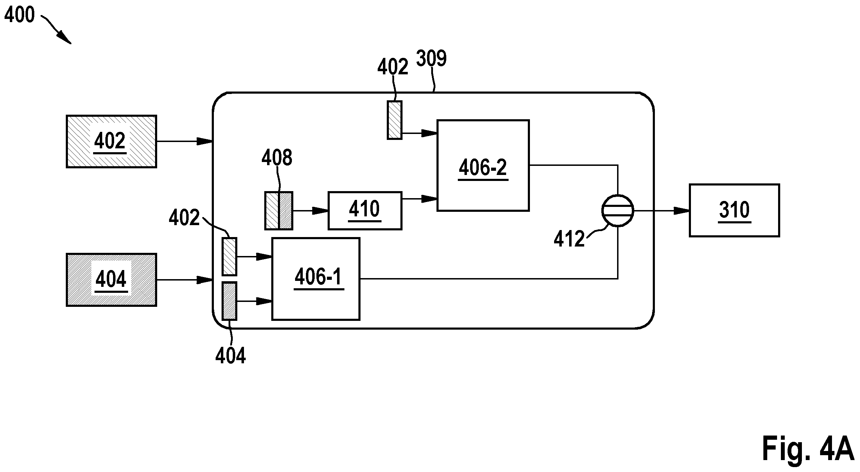

**FIG.4A** zeigt verschiedene Aspekte des (Intra-Inter-) Fusionierens (IIF) von intra-sensortyp Merkmalen mit inter-sensortyp Merkmalen eines gemeinsamen Merkmalraums mittels des Fusionsabschnitts 309.

Hierbei können dem Fusionsabschnitt 309 die intra-sensortyp Merkmale $F_{intra}$ 402 (z.B. $F_{l\text{-}bev}$ oder $F_{c\_pv}$) und die inter-sensortyp Merkmale $F_{inter}$ 404 (z.B. $F_{c\_bev}$ oder $F_{1\_pv}$) eines gemeinsamen Merkmalraums (z.B. BEV oder PV) eingegeben werden.

Dieser beispielhafte Fusionsabschnitt 309 kann zwei Fusionseinheiten 406 aufweisen. Die erste Fusionseinheit 406-1 kann die intra-sensortyp Merkmale $F_{intra}$ 402 und die inter-sensortyp Merkmale $F_{inter}$ 404 direkt als Eingabe erhalten. Für die zweite Fusionseinheit 406-2 können die intra-sensortyp Merkmale $F_{intra}$ 402 und die inter-sensortyp Merkmale $F_{inter}$ 404 zu verketteten Merkmalen 408 verkettet werden und diese verketteten Merkmale 408 können optional mittels einer oder mehr als einer Faltungsschicht 410 vorverarbeitet werden. Die zweite Fusionseinheit 406-2 kann dann die intra-sensortyp Merkmale $F_{intra}$ 402 und die vorverarbeiteten und verketteten Merkmale als Eingabe erhalten. Dadurch kann die erste Fusionseinheit 406-1 eingerichtet sein zum Erfassen eines lokalen Kontextes und die zweite Fusionseinheit 406-2 kann eingerichtet sein, einen global angereicherten räumlichen Kontext zu erfassen. Die Ausgabe der ersten Fusionseinheit 406-1 und die Ausgabe der zweiten Fusionseinheit 406-2 können dann (in 412) zu den gemeinsamen Merkmalen (z.B. den ersten Merkmalen 310-1 $F_{bev}$ oder den zweiten Merkmalen 310-2 $F_{pv}$) in dem gemeinsamen Merkmalraum kombiniert werden.

Eine Fusionseinheit 406, wie hierin beschrieben, kann die intra-sensortyp Merkmale und die inter-sensortyp Merkmale unter Verwendung ein oder mehrerer Fensteraufmerksamkeitsblöcke 432 (auch als Fensteraufmerksamkeitstransformer bezeichnet) fusionieren.

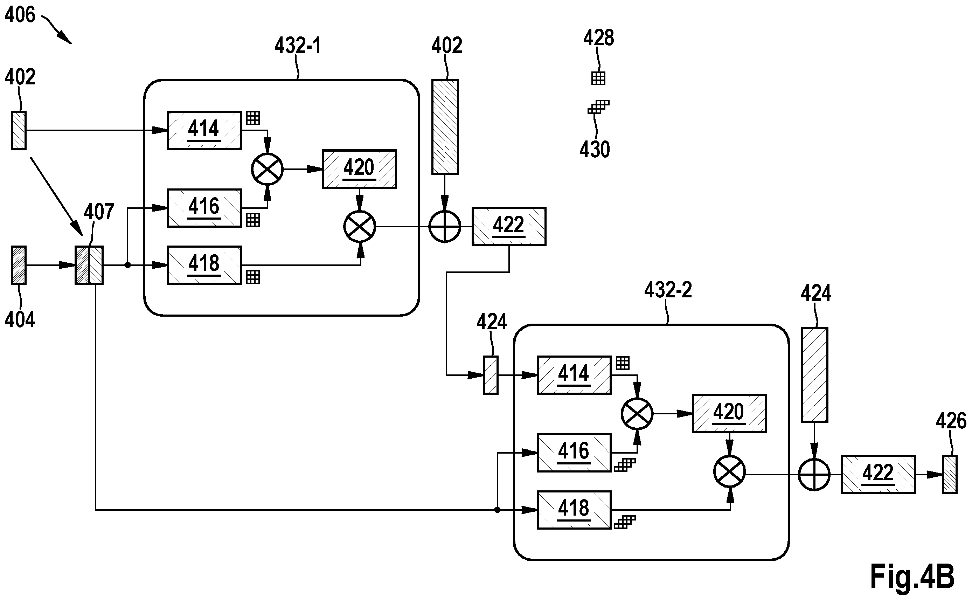

FIG.4B zeigt eine Fusionseinheit 406 gemäß verschiedenen Aspekten beispielhaft für die erste Fusionseinheit 406-1. Die Fusionseinheit 406 kann einen ersten Fensteraufmerksamkeitsblock 432-1 und einen zweiten Fensteraufmerksamkeitsblock 432-2 aufweisen.

Ein Fensteraufmerksamkeitsblock 432 kann allgemein Abfragen (engl.: Query, Q) 414, einen Schlüssel (engl.: Key, K) 416 und einen Wert (engl.: Value, V) 418 aufweisen. Der erste Fensteraufmerksamkeitsblock 432-1 kann die intra-sensortyp Merkmale $F_{intra}$ 402 zum Ermitteln der Abfragen, Q, 414.

Die intra-sensortyp Merkmale $F_{intra}$ 402 und die inter-sensortyp Merkmale $F_{inter}$ 404 können zu Merkmalen 407 verkettet werden. Das Ermitteln der Aufmerksamkeit (engl.: Attention) kann erfolgen gemäß:

$$\text{Aufmerksamkeit}\,(Q, K, V) = \text{Softmax}\left(\frac{QK^T}{\sqrt{d}} + B\right)V$$

wobei d die Einbettungsdimension ist und $B$ ein optionales relatives Positions-Bias ($B \in \mathbb{R}^{M^2 \times M^2}$, wobei M × M die Fenstergröße ist) zur Berücksichtigung von Positionsinformationen ist.

Die Fusionseinheit 406 kann ein vorwärtsgerichtetes neuronales Netzwerk (engl.: FeedForward Network) 422 aufweisen. Das vorwärtsgerichtete neuronale Netzwerk 422 kann in Reaktion auf das Eingeben der Ausgabe des ersten Fensteraufmerksamkeitsblocks 432-1 in das vorwärtsgerichtete neuronale Netzwerk 422 eine Zwischenausgabe 424 ausgeben.

Der zweite Fensteraufmerksamkeitsblock 432-2 kann im Wesentlichen dem ersten Fensteraufmerksamkeitsblock 432-1 entsprechen, wobei allerdings die Zwischenausgabe 424 zum Ermitteln der Abfragen, Q, 414 herangezogen werden, und wobei die Merkmale 407 (z.B. um $\left[-\left\lfloor\frac{M}{2}\right\rfloor, \left\lfloor\frac{M}{2}\right\rfloor\right]$) verschoben werden (siehe 430). Anschaulich kann der erste Fensteraufmerksamkeitsblock ein Merkmale nicht verschiebender Fensteraufmerksamkeitsblock 428 sein und der zweite Fensteraufmerksamkeitsblock kann ein Merkmale verschiebender Fensteraufmerksamkeitsblock 430 sein. Indem die dem Schlüssel, K, 416 und die dem Wert, V, 418 zugehörigen Merkmale verschoben werden, während die Abfragen, Q, 414 der vorherigen Zwischenausgabe 424 entsprechen, kann eine fensteraufmerksamkeitsblock-übergreifende Verbindung hergestellt werden, wodurch die Aufmerksamkeitsspanne der verschiedenen Sensortypen erhöht werden kann. Ein nachfolgendes vorwärtsgerichtetes neuronales Netzwerk 422 kann dann die Ausgabe 426 der Fusionseinheit 406 ausgeben.

Auf diese Weise integriert der Fusionsabschnitt 309 effektiv Merkmale aus beiden Modalitäten (also aus Lidar und Kamera). Die Erfinder haben erkannt, dass dieser hierarchische Ansatz ein Gleichgewicht zwischen der Erfassung lokaler Muster - die für die Identifizierung und Unterscheidung von Objekten entscheidend sind - und der Gewinnung eines umfassenden kontextuellen Verständnisses der Umgebung des Fahrzeugs 100 und der Beziehungen zwischen Objekten schafft.

Mit Bezug auf FIG.3 kann das maschinelle Lernmodell 302 (mindestens) einen ersten Decoder 312-1 und (mindestens) einen zweiten Decoder 312-2 aufweisen. Der erste Decoder 312-1 kann eingerichtet sein, (gemäß einer Abfrage 314 von Objektkandidaten) erste Objektkandidaten anhand der ersten Merkmale 310-1 $F_{bev}$ zu ermitteln. Der zweite Decoder 312-2 kann eingerichtet sein, (gemäß der Abfrage 314 von Objektkandidaten) zweite Objektkandidaten anhand der zweiten Merkmale 310-2 $F_{pv}$ zu ermitteln. Anschaulich kann der erste Decoder 312-1 erste Objektkandidaten anhand der Merkmale des ersten Merkmalraums (BEV) ermitteln und der zweite Decoder 312-2 kann zweite Objektkandidaten anhand der Merkmale des zweiten Merkmalraums (PV) ermitteln.

Gemäß verschiedenen Aspekten können den zweiten Merkmalen 310-2 $F_{pv}$ zweite 3D Positionsinformationen 316-2 zugeordnet werden. Hierzu kann für jede Kamera, i, die Daten für die Kameradaten 304-2 bereitstellt, ein jeweiliges Kameragitter $G_i$ erzeugt werden. Das Sichtfeld einer Kamera, i, kann als Kegelstumpf betrachtet werden und das jeweilige Kameragitter $G_i$ kann definiert werden als $G_i \in \mathbb{R}^{W_f \times H_f \times D_f}$ im Kegelstumpfraum, wobei $W_f$ die Breite, $H_f$ die Höhe, und $D_f$ die Tiefe des Kegelstumpfes ist. Jeder Punkt $\alpha$ des Kameragitters $G_i$ kann dann als $G_i^a = (u_a \cdot d_a, v_a \cdot d_a, d_a, 1)^T$ ausgedrückt werden, wobei $(u_a, v_a)$ Bildpunktkoordinaten im PV-Raum der i-ten Kamera darstellt und $d_a$ den Tiefenwert repräsentiert. Die entsprechenden (globalen) 3D-Koordinaten $p_i^{3d}$ können dann unter Verwendung der extrinsischen Kalibrierung zwischen der jeweiligen Kamera, i, 110 und dem Lidarsensor 109 ermittelt werden.

Entsprechend können den ersten Merkmalen 310-1 $F_{bev}$ erste 3D Positionsinformationen 316-1 zugeordnet werden. Hierzu kann für den Lidarsensor 309 ein Lidargitter $G_{bev}$ erzeugt werden. Jeder Punkt b des Lidargitter $G_{bev}$ kann ausgedrückt werden gemäß $G_{bev}^b = (i_b, j_b, h_b, 1)$, wobei $(i_b, j_b)$ die jeweiligen Bildpunktkoordinaten im ersten (BEV-) Merkmalsraum angibt und $h_b$ die Höhe ist. Die entsprechenden (globalen) 3D-Koordinaten können dann durch Multiplikation der jeweiligen Bildpunktkoordinaten $(i_b, j_b)$ mit der Gittergröße $(s_x, s_y)$ ermittelt werden, so dass für die entsprechenden (globalen) 3D-Koordinaten $p_{bev}^{3d}$ gilt: $p_{bev}^{3d} = (i_b \cdot s_x, j_b \cdot s_y, h_b, 1)$.

Die (globalen) 3D-Koordinaten $p_{bev}^{3d}$ können dann (z.B. mittels eines mehrschichtigen Perzeptrons (MLP)) in erste 3D-Positionsmerkmale transformiert werden. Die so ermittelten ersten 3D-Positionsmerkmale können dann als erste 3D Positionsinformationen 316-1 den ersten Merkmalen 310-1 $F_{bev}$ zu geordnet werden, um erste positionsbezogene Merkmale $F_{bev}^{3D}$ zu ermitteln. Entsprechend können die (globalen) 3D-Koordinaten $p_i^{3d}$ (z.B. mittels des mehrschichtigen Perzeptrons (MLP)) in zweite 3D-Positionsmerkmale transformiert werden. Die so ermittelten zweiten 3D-Positionsmerkmale können dann als zweite 3D Positionsinformationen 316-2 den zweiten Merkmalen 310-2 $F_{pv}$ zu geordnet werden, um zweite positionsbezogene Merkmale $F_{pv}^{3D}$ zu ermitteln.

Die ersten positionsbezogenen Merkmale $F_{bev}^{3D}$ können dann dem ersten Decoder 312-1 zugeführt werden, um die ersten Objektkandidaten zu ermitteln und die zweiten positionsbezogenen Merkmale $F_{pv}^{3D}$ können dem zweiten Decoder 312-2 zugeführt werden, um die zweiten Objektkandidaten zu ermitteln. Auf diese Weise werden die 3D Positionen der Merkmale berücksichtigt und die Objekterkennungsrate zusätzlich erhöht.

Das maschinelle Lernmodell 302 kann (mindestens) einen dritten Decoder 318 aufweisen. Der dritte Decoder 318 kann eingerichtet sein, unter Verwendung der ersten Objektkandidaten und der zweiten Objektkandidaten gemeinsame Objektkandidaten zu ermitteln. In 422 kann dann beispielsweise unter Verwendung dieser gemeinsamen Objektkandidaten das zumindest eine Objekt 320 in der Umgebung des Fahrzeugs 100 erkannt werden. Es wird verstanden, dass beim Ermitteln von (den ersten und zweiten) Objektkandidaten die Objekt-Abfragen 314 schrittweise mit mehr Informationen angereichert werden können (auch als Verfeinern bezeichnet). Jeder hierin beschriebene Decoder kann beispielsweise ein DETR (Detektions-Transformer) Decoder sein.

Ein hierin beschriebener Objektkandidat kann einen (z.B. 3D) Begrenzungsrahmen $\hat{b}$, welcher eine Position des zumindest einen Objekts 320 (in den Sensordaten) angibt, und/oder kann eine Klasse $\hat{p}$ (z.B. eine Objektart) des zumindest einen Objekts 320 repräsentieren.

Ein Verfahren zum Steuern eines Roboters (z. B. des Fahrzeugs 100 oder einer anderen Robotervorrichtung) kann ein Erfassen der ersten Sensordaten und der zweiten Sensordaten aufweisen und kann ein Erkennen des zumindest einen Objekts gemäß dem Verfahren 200 aufweisen. Das Verfahren zum Steuern des Roboters kann ferner ein Steuern des Roboters (z. B. des Fahrzeugs 100) unter Berücksichtigung des erkannten zumindest einen Objekts aufweisen (z.B. ein Steuern des Fahrzeugs 100, um dem zumindest einen Objekt auszuweichen, dessen Geschwindigkeit anzupassen, etc.).

Obgleich in den obigen Ausführungen der Ansatz von FIG.2 zur Objekterkennung in der Umgebung des Fahrzeugs 100 angewendet wird, kann dieser allgemein zur Objekterkennung in der Umgebung eines beliebigen technischen Systems angewendet werden in einem Szenario, in dem multi-modale Sensordaten eine Rolle spielen können, wie z.B. eine computergesteuerte Maschine, wie ein Roboter, ein Fahrzeug, ein Haushaltsgerät, ein Elektrowerkzeug, eine Fertigungsmaschine, ein persönlicher Assistent oder ein Zugangskontrollsystem.

Das zur Objekterkennung eingerichtete maschinelle Lernmodell 302 kann erzeugt (z.B. gelernt oder trainiert) werden während das Fahrzeug 100 nicht in Betrieb ist.

Zum Trainieren des maschinellen Lernmodells 302 können vergleichsweise große Mengen gelabelter Sensordaten erforderlich sein. Das Erzeugen gelabelter Sensordaten ist kosten- und zeitaufwändig. Daher kann es wünschenswert sein, diesen Aufwand zu verringern.

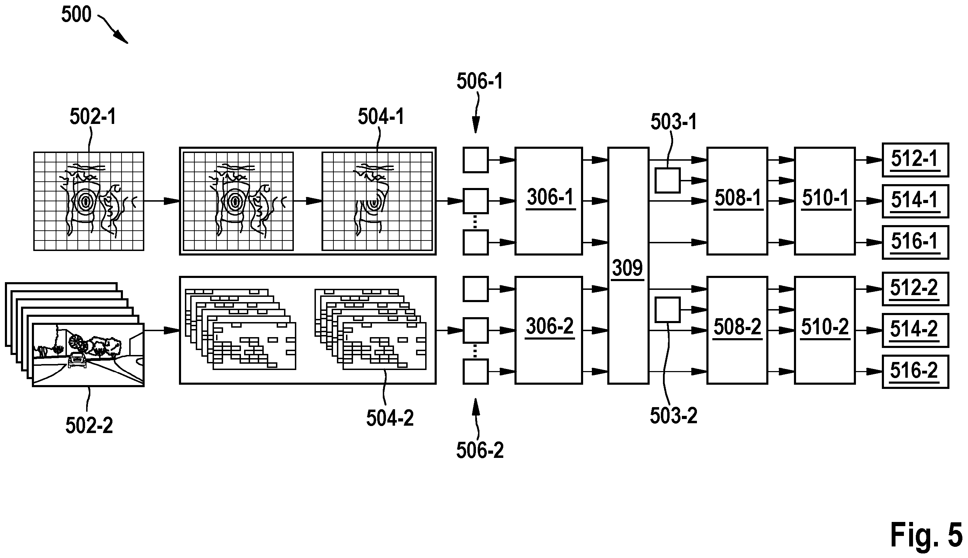

**FIG.5** zeigt ein schematisches Ablaufdiagramm eines Verfahrens 500 zum (selbst-überwachten) Vortrainieren verschiedener Komponenten des maschinellen Lernmodells 302 gemäß verschiedenen Aspekten. Dieses Verfahren ermöglicht ein Vortrainieren anhand von nicht-gelabelten und daher deutlich kostengünstigeren Sensordaten. Anschaulich wird dadurch die Dateneffizienz signifikant erhöht. Auch ermöglicht das Verfahren ein Vortrainieren anhand von nicht-gelabelten Sensordaten, welche nur spärliche Informationen aufweisen (z.B. spärliche Lidardaten, was beim zumindest teilweise autonomen Fahrens häufig der Fall ist).

Die vortrainierten Komponenten des maschinellen Lernmodells 302 können hierbei zumindest den ersten Encoder 306-1 und den zweiten Encoder 306-2 aufweisen. Im Folgenden wird das Vortrainieren beispielhaft für diesen Fall beschrieben, allerdings wird verstanden, dass auch der erste Decoder 312-1 und der zweite Decoder 312-2 entsprechend vortrainiert werden können.

Zur Veranschaulich wird auch das Verfahren 500 für Lidardaten 502-1 und Kameradaten 502-2 beschrieben. Es wird verstanden, dass dies beispielhaft ist und die Komponenten für die Art an Sensordaten vortrainiert werden können, welche dann auch in Inferenz (siehe zum Beispiel FIG:3 und zugehörige Beschreibung) herangezogen werden sollen.

Zuerst können maskierte Lidardaten 504-1 erzeugt werden, indem die Lidardaten 502-1 maskiert werden. Ferner können maskierte Kameradaten 504-2 erzeugt werden, indem die Kameradaten 502-2 maskiert werden. Als Maskieren, wie hierin verwendet, kann verstanden werden, dass ein Teil der Sensordaten gemäß einer Maske 503 gelöscht wird. Beispielsweise kann ein Teil der Lidardaten 502-1 gemäß einer ersten Maske 503-1 gelöscht werden. Beispielsweise kann ein Teil der Kameradaten 502-2 gemäß einer zweiten Maske 503-2 gelöscht werden. Das Maskieren kann in jeder Iteration, in welcher Lidardaten 502-1 und zugehörige Kameradaten 502-2 zugeführt werden, im Wesentlichen zufällig (und asymmetrisch) erfolgen. Optional kann eine der beiden Modalitäten (also Lidar oder Kamera) ausgewählt werden und für die ausgewählte Modalität kann eine größere Maskierungsrate verwendet werden (also ein größerer Anteil der Sensordaten kann gelöscht werden).

Der erste Encoder 306-1 kann dann anhand der maskierten Lidardaten 504-1 die intra-Lidar-Merkmale $F_{1\_bev}$ ermitteln und der zweite Encoder 306-2 kann anhand der maskierten Kameradaten 504-2 die intra-Kamera-Merkmale $F_{c\text{-}pv}$ ermitteln. Wie mit Bezug auf FIG.3 erläutert, können die intra-Kamera-Merkmale $F_{c\text{-}pv}$ als inter-Lidar-Merkmale $F_{c\_bev}$ in den ersten Merkmalsraum 308-1 abgebildet werden und die intra-Lidar-Merkmale $F_{1\_bev}$ können als inter-Kamera-Merkmale $F_{1\_pv}$ in den zweiten Merkmalsraum 308-2 abgebildet werden. Der Fusionsabschnitt 309 kann dann die intra-Lidar-Merkmale $F_{1\_bev}$ und die inter-Lidar-Merkmale $F_{c\_bev}$ zu den ersten Merkmalen 310-1 $F_{bev}$ fusionieren und kann die intra-Kamera-Merkmale $F_{c\text{-}pv}$ und die inter-Kamera-Merkmale $F_{1\_pv}$ zu den zweiten Merkmalen 310-2 $F_{pv}$ fusionieren.

Die ersten Merkmale 310-1 $F_{bev}$ können dann (beispielsweise zusammen mit der Maske 503-1) einem Lidar-Decoder 508-1 zugeführt werden und eine Ausgabe des Lidar-Decoders 508-1 kann einem ersten Vorhersageabschnitt (engl.: prediction head) 510-1 zugeführt werden.

Entsprechend können die zweiten Merkmale 310-2 $F_{pv}$ (beispielsweise zusammen mit der Maske 503-2) einem Kamera-Decoder 508-2 zugeführt werden und eine Ausgabe des Kamera-Decoders 508-2 kann einem zweiten Vorhersageabschnitt 510-2 zugeführt werden. Jeder Vorhersageabschnitt 510-1, 510-2 kann eingerichtet sein, rekonstruierte Sensordaten 512 und/oder eine charakteristische Eigenschaft des jeweils anderen Sensortyps und/oder ein den maskierten Sensordaten hinzugefügtes Rauschen 516 vorherzusagen.

Gemäß verschiedenen Aspekten kann der erste Vorhersageabschnitt 510-1 eingerichtet sein, rekonstruierte Lidardaten 512-1 (als Rekonstruktion der Lidardaten 502-1) vorherzusagen. Der zweite Vorhersageabschnitt 510-2 eingerichtet sein, rekonstruierte Kameradaten 512-2 (als Rekonstruktion der Kameradaten 502-2) vorherzusagen. Der erste Encoder 306-1 (und optional ferner der erste Decoder 312-1) kann dann durch Vergleichen der rekonstruierten Lidardaten 512-1 mit den Lidardaten 502-1 trainiert werden. Entsprechend kann der zweite Encoder 306-2 (und optional ferner der zweite Decoder 312-2) durch Vergleichen der rekonstruierten Kameradaten 512-2 mit den Kameradaten 502-2 trainiert werden.

Auf diese Weise kann sichergestellt werden, dass auch in dem Fall, in dem ein Sensor teilweise fehlende Sensordaten und/oder spärliche Sensordaten ausgibt, eine Objekterkennung in einem solchen Szenario erhöht wird und damit eine korrekte Objekterkennung sichergestellt ist.

Beispielsweise kann zum Trainieren des zweiten Encoders 306-2 der L1-Fehler ($L_{L1}$) (auch als L1-Abstandsmetrik bezeichnet) zwischen den Kameradaten 502-2 und den rekonstruierten Kameradaten 512-2 mit den verringert (z.B. minimiert) werden, beispielsweise gemäß:

$$L_{\mathrm{L1}} = \frac{1}{N_{mp}} \sum_{i=1}^{N_{mp}} \left| \hat{I}_i - I_i \right|$$

wobei $\hat{I}_i$ der vorhergesagte Bildpunktwert des i-ten maskierten Bildpunktes ist und $I_i$ der (Grundwahrheits-) Bildpunkt des i-ten maskierten Bildpunktes ist, und wobei $N_{mp}$ die Anzahl an maskierten Bildpunkten ist.

Zum Trainieren des ersten Encoders 306-1 kann ein Abstandswert ($L_{\text{Chamfer}}$, z.B. gemäß der Chamfer-Abstandsmetrik) zwischen den Lidardaten 502-1 und den rekonstruierten Lidardaten 512-1 verringert (z.B. minimiert) werden, beispielsweise gemäß:

$$L_{\text{Chamfer}}\left(P_{\text{gt,i}}, P_{\text{rec,i}}\right) = \frac{1}{|P_{\text{gt,i}}|} \sum_{x \in P_{\text{gt,i}}} f\left(x, P_{\text{rec,i}}\right) + \frac{1}{|P_{\text{rec,i,i}}|} \sum_{\tilde{x} \in P_{\text{rec,i,i}}} f\left(\tilde{x}, P_{\text{gt,i}}\right)$$

$$f(x, P) = \|x - P^j\|_2^2, \text{ with } j = \arg \min_k \|x - P^k\|_2^2$$

wobei $P_{\text{rec},i} = \{\tilde{x}_1, \tilde{x}_2, \cdots, \tilde{x}_N\}$ die vorhergesagten (rekonstruierten) Voxel und $P_{\text{gt},i} = \{x_1, x_2, \cdots, x_N\}$ die (Grundwahrheits-) Voxel der Lidardaten 502-1 für jeden i-ten maskierten Voxel der N maskierten Voxel sind; und wobei $\|\cdot\|_2$ die L2-Abstandsmetrik angibt.

Die Chamfer-Abstandsmetrik kann sicherstellen, dass jeder Punkt der Grundwahrheitsdaten $P_{\text{gt}}$ nahe zu einem Punkt der rekonstruierten Daten $P_{\text{rec}}$ ist.

Gemäß verschiedenen Aspekten kann der erste Vorhersageabschnitt 510-1 eingerichtet sein, zumindest eine charakteristische Eigenschaft (z.B. Bildpunktwerte (z.B. eine Bildpunktintensität), Höhenwerte, etc.) der Kameradaten 502-2 vorherzusagen (als vorhergesagte charakteristische Eigenschaft 514-1). Entsprechend kann der zweite Vorhersageabschnitt 510-2 eingerichtet sein, zumindest eine charakteristische Eigenschaft (z.B. von Tiefenwerte) der Lidardaten 502-1 vorherzusagen (als vorhergesagte charakteristische Eigenschaft 514-2).

Der erste Encoder 306-1 (und optional ferner der erste Decoder 312-1) kann dann durch Vergleichen der vorhergesagten charakteristischen Eigenschaft 514-1 mit der zugehörigen charakteristischen Eigenschaft der Kameradaten 502-2 trainiert werden. Entsprechend kann der zweite Encoder 306-2 (und optional ferner der zweite Decoder 312-2) durch Vergleichen der vorhergesagten charakteristischen Eigenschaft 514-2 mit der zugehörigen charakteristischen Eigenschaft der Lidardaten 502-1 trainiert werden.

Anschaulich lernt der erste Encoder 306-1 aus den Lidardaten 304-1 Merkmale zu extrahieren, welche eine Aussage über die charakteristische Eigenschaft der Kameradaten 304-2 erlauben und der zweite Encoder 306-2 lernt aus den Kameradaten 304-2 Merkmale zu extrahieren, welche eine Aussage über die charakteristische Eigenschaft der Lidardaten 304-1 erlauben. Anschaulich wird eine intermodale Konsistenz erreicht, welche im Falle von Sensorfehlern (wenn aufgrund eines Ausfalls beispielsweise nur einer Sensortypen verfügbar ist) weiterhin eine korrekte Objekterkennung sicherstellen und damit die Robustheit der Objekterkennung erhöhen.

Wie voranstehend erläutert, kann eine erste Modalität in einer Iteration eine größere Maskierungsrate als eine zweite Modalität aufweisen. Dadurch können der erste Encoder 306-1 und der zweite Encoder 306-2 lernen, modalitätsübergreifende Informationen aus den nicht-maskierten Bereichen der zweiten Modalität zu nutzen, um die Attribute der ersten Modalität vorherzusagen.

Wie voranstehend erläutert kann der erste Vorhersageabschnitt 510-1 eingerichtet sein, Bildpunktwerte (z.B. Bildpunktintensität) der Kameradaten 502-2 vorherzusagen und die zweite Vorhersageabschnitt 510-2 kann eingerichtet sein, eine Tiefe der Lidardaten 502-1 vorherzusagen.

Zum Trainieren des ersten Encoders 306-1 kann ein Fehlerterm zur Chamfer-Abstandsmetrik hinzugefügt werden und zwar gemäß

$$\tilde{f}(x, P) = \|x - P^j\|_2^2 + \lambda \left|x_I - P_I^j\right|, \text{ with } j = \arg \min_k \|x - P^k\|_2^2$$

wobei $\lambda$ eine Fehlerausgleichsbedingung angibt, $x_I$ der Grundwahrheits-Bildpunktwert ist, und $P_I^j$ der vorhergesagte Bildpunktwert ist.

Zum Trainieren des zweiten Encoders 306-2 kann der folgende Tiefen-Fehlerterm $L_{\text{Tiefe}}$ verwendet werden:

$$L_{\text{Tiefe}}\left(d,\hat{d}\right) = \frac{1}{N_{mp}}\sum_{i}^{N_{mp}}\left(\log d_i - \log \hat{d}_i\right)^2 - \frac{1}{N_{mp}^2}\left(\sum_{i}^{N_{mp}}\left(\log d_i - \log \hat{d}_i\right)\right)^2$$

$$+\left(\frac{1}{N_{mp}}\sum_{i}^{N_{mp}}\frac{d_i - \hat{d}_i}{d_i}\right)^2$$

wobei d die Grundwahrheits-Tiefe ist und d die vorhergesagte Tiefe ist. Anschaulich ist dieser beispielhafte Fehlerterm eine Kombination aus dem skaleninvarianten logarithmischen Fehler und dem relativen quadratischen Fehler.

Soll das Rauschen vorhergesagt werden, kann den maskierten Lidardaten 504-1 ein erstes (z.B. Gaußsches) Rauschen 506-1 hinzugefügt werden, bevor diese dem ersten Encoder 306-1 zugeführt werden. Entsprechend kann den maskierten Kameradaten 504-2 ein zweites (z.B. Gaußsches) Rauschen 506-2 hinzugefügt werden, bevor diese dem zweiten Encoder 306-2 zugeführt werden.

Der erste Vorhersageabschnitt 510-1 kann dann ein erstes vorhergesagtes Rauschen 516-1 als Vorhersage des ersten Rauschens 506-1 ermitteln. Der zweite Vorhersageabschnitt 510-2 kann ein zweites vorhergesagtes Rauschen 516-2 als Vorhersage des zweiten Rauschens 506-2 ermitteln

Der erste Encoder 306-1 (und optional ferner der erste Decoder 312-1) kann dann durch Vergleichen des ersten vorhergesagten Rauschens 516-1 mit dem hinzugefügten ersten Rauschen 506-1 trainiert werden. Entsprechend kann der zweite Encoder 306-2 (und optional ferner der zweite Decoder 312-2) durch Vergleichen des zweiten vorhergesagten Rauschens 516-2 mit dem hinzugefügten zweiten Rauschen 506-2 trainiert werden. Dadurch lernt der jeweilige Encoder 306-1, 306-2 in den erzeugten Merkmalen Details, Oberflächenvariationen, etc. einzubeziehen, wodurch die Objekterkennungsrate erhöht wird.

Das Trainieren des zweiten Encoders 306-2 kann zum Beispiel durch Verringern (z.B. Minimieren) des L1-Fehlers $L_{1\_\text{Rauschen\_Kamera}}$ (gemäß der L1-Abstandsmetrik) zwischen dem zweiten vorhergesagten Rauschen 516-2 und dem zweiten Rauschen 506-2 erfolgen, beispielsweise gemäß:

$$L_{1\_\text{Rauschen\_Kamera}} = \frac{1}{N_{up}}\sum_{i=1}^{N_{up}}|\hat{n}_i - n_i|$$

wobei $\hat{n}_i$ das vorhergesagte Rauschen und $n_i$ das (tatsächlich) zu dem i-ten unmaskierten Bildpunkt hinzugefügte Rauschen ist, und wobei $N_{up}$ die Anzahl an unmaskierten Bildpunkten ist.

Das Trainieren des ersten Encoders 306-1 kann durch Verringern (z.B. Minimieren) des L1-Fehlers $L_{1\_\text{Rauschen\_Lidar}}$ (gemäß der L1-Abstandsmetrik) zwischen dem ersten vorhergesagten Rauschen 516-1 und dem ersten Rauschen 506-1 erfolgen, beispielsweise gemäß:

$$L_{\text{Rauschen\_Lidar}}\left(N_{a,i}, N_{p,i}\right) = \frac{1}{|N_{a,i}|}\sum_{n\in N_{p,i}}\min_{\tilde{p},i}\parallel n - \tilde{n}\parallel_2^2 + \frac{1}{|N_{p,i}|}\sum_{\tilde{n}\in N_{n,i}}\min_{x\in N_{a,i}}\parallel \tilde{n} - n\parallel_2^2$$

wobei $N_{a,i} = \{n_1, n_2, \cdots, n_N\}$ der Satz an zu dem jeweiligen i-ten unmaskierten Voxel hinzugefügten Rauschen aufweist und wobei $N_{p,i} = \{\tilde{n}_1, \tilde{n}_2, \cdots, \tilde{n}_N\}$ das für den jeweiligen i-ten unmaskierten Voxel vorhergesagte Rauschen aufweist.

Durch das hierin beschriebene Vortrainieren kann der Bedarf an gelabelten Sensordaten für das Trainieren (und damit der Aufwand (z.B. Zeitaufwand, Kostenaufwand, etc.)) signifikant verringert werden.

Gemäß verschiedenen Aspekten kann das maschinelle Lernmodell 302, welches den vortrainierten ersten Encoder 306-1 und den vortrainierten zweiten Encoder 306-2 (und optional ferner den vortrainierten ersten Decoder 312-1 und/oder den vortrainierten zweiten Decoder 312-2) aufweist, unter Verwendung gelabelter Trainingsdaten (aufweisend Lidardaten und Kameradaten) trainiert werden.

**Patentansprüche**

1. Verfahren (200) zur Objekterkennung in einer Umgebung einer Robotervorrichtung (100), das Verfahren (200) aufweisend:

• Empfangen (202) erster Sensordaten (304-1) von mindestens einem ersten Sensor (109), welcher einen ersten Sensortyp zum Wahrnehmen der Umgebung der Robotervorrichtung (100) in einer ersten Ansicht aufweist;

• Empfangen (204) zweiter Sensordaten (304-2) von mindestens einem zweiten Sensor (110), welcher einen von dem ersten Sensortyp verschiedenen zweiten Sensortyp zum Wahrnehmen der Umgebung der Robotervorrichtung (100) in einer von der ersten Ansicht verschiedenen zweiten Ansicht aufweist;

• Eingeben (206) der ersten Sensordaten (304-1) in einen ersten Encoder (306-1), um erste intra-sensortyp Merkmale in einem die erste Ansicht repräsentierenden ersten latenten Raum (308-1) zu ermitteln;

• Eingeben (208) der zweiten Sensordaten (304-2) in einen zweiten Encoder (306-2), um zweite intra-sensortyp Merkmale (407) in einem die zweite Ansicht repräsentierenden zweiten latenten Raum (308-2) zu ermitteln;

• Ermitteln (210) erster inter-sensortyp Merkmale, indem die zweiten intra-sensortyp Merkmale in den ersten latenten Raum (308-1) projiziert werden;

• Ermitteln (212) zweiter inter-sensortyp Merkmale, indem die ersten intra-sensortyp Merkmale in den zweiten latenten Raum (308-2) projiziert werden;

• Fusionieren (214) der ersten intra-sensortyp Merkmale und der ersten inter-sensortyp Merkmale in dem ersten latenten Raum (308-1), um erste Merkmale (310-1) zu ermitteln;

• Fusionieren (216) der zweiten intra-sensortyp Merkmale (407) und der zweiten inter-sensortyp Merkmale in dem zweiten latenten Raum (308-2), um zweite Merkmale (310-2) zu ermitteln;

• Ermitteln (218), mittels eines ersten Decoders (312-1), erster Objektkandidaten anhand der ersten Merkmale (310-1);

• Ermitteln (220), mittels eines zweiten Decoders (312-2), zweiter Objektkandidaten anhand der zweiten Merkmale (310-2); und

• Erkennen (222) zumindest eines Objekts (320) in der Umgebung der Robotervorrichtung (100) unter Verwendung der ersten Objektkandidaten und der zweiten Objektkandidaten.

2.  Verfahren (200) gemäß Anspruch 1, ferner aufweisend:

   • Ermitteln erster positionsbezogener Merkmale (316-1), indem jedem der ersten Merkmale (310-1) eine jeweilige drei-dimensionale Position in der Umgebung in der Robotervorrichtung (100) zugeordnet wird;

   • Ermitteln zweiter positionsbezogener Merkmale (316-2), indem jedem der zweiten Merkmale (310-2) eine jeweilige drei-dimensionale Position in der Umgebung in der Robotervorrichtung (100) zugeordnet wird; und

   • Erkennen des zumindest einen Objekts (320) unter Verwendung der ersten positionsbezogenen Merkmale (316-1) und der zweiten positionsbezogenen Merkmale (316-2).

3.  Verfahren (200) gemäß Anspruch 1 oder 2,

   wobei das Fusionieren (214) der ersten intra-sensortyp Merkmale und der ersten inter-sensortyp Merkmale aufweist:

      • Eingeben der ersten intra-sensortyp Merkmale und der ersten inter-sensortyp Merkmale in ein oder mehrere erste Fensteraufmerksamkeitsblöcke (406-1), um erste Zwischenmerkmale zu ermitteln;
      • Eingeben der ersten intra-sensortyp Merkmale und einer Verkettung der ersten intra-sensortyp Merkmale mit den ersten inter-sensortyp Merkmale in ein oder mehrere zweite Fensteraufmerksamkeitsblöcke (406-2), um zweite Zwischenmerkmale zu ermitteln; und
      • Ermitteln der ersten Merkmale (310-1) durch Kombinieren (412) der ersten Zwischenmerkmale und der zweiten Zwischenmerkmale;

   und/oder
   wobei das Fusionieren (216) der zweiten intra-sensortyp Merkmale und der zweiten inter-sensortyp Merkmale aufweist:

      • Eingeben der zweiten intra-sensortyp Merkmale und der zweiten inter-sensortyp Merkmale in ein oder mehrere erste Fensteraufmerksamkeitsblöcke (406-1), um erste Zwischenmerkmale zu ermitteln;
      • Eingeben der zweiten intra-sensortyp Merkmale und einer Verkettung der zweiten intra-sensortyp Merkmale mit den zweiten inter-sensortyp Merkmale in ein oder mehrere zweite Fensteraufmerksamkeitsblöcke (406-2), um zweite Zwischenmerkmale zu ermitteln; und
      • Ermitteln der zweiten Merkmale (310-2) durch Kombinieren (412) der ersten Zwischenmerkmale und der zweiten Zwischenmerkmale.

4. Verfahren (500) zum Trainieren eines ersten Encoders (306-1) und eines zweiten Encoders (306-2) für ein zur Objekterkennung eingerichtetes maschinelles Lernmodell (302), das Verfahren (500) aufweisend:

• Erzeugen erster maskierter Sensordaten (504-1) mittels Maskierens erster Sensordaten (502-1), welche einem ersten Sensortyp zugeordnet sind und die Umgebung der Robotervorrichtung (100) in einer ersten Ansicht repräsentieren;
• Erzeugen zweiter maskierter Sensordaten (504-2) mittels Maskierens zweiter Sensordaten (502-2), welche einem von dem ersten Sensortyp verschiedenen zweiten Sensortyp zugeordnet sind und die Umgebung der Robotervorrichtung (100) in einer von der ersten Ansicht verschiedenen zweiten Ansicht repräsentieren;
• Eingeben der ersten maskierten Sensordaten (504-1) in den ersten Encoder (306-1), um erste intra-sensortyp Merkmale in einem die erste Ansicht repräsentierenden ersten latenten Raum (308-1) zu ermitteln;
• Eingeben der zweiten maskierten Sensordaten (504-2) in den zweiten Encoder (306-2), um zweite intra-sensortyp Merkmale in einem die zweite Ansicht repräsentierenden zweiten latenten Raum (308-2) zu ermitteln;
• Ermitteln erster inter-sensortyp Merkmale, indem die zweiten intra-sensortyp Merkmale in den ersten latenten Raum (308-1) projiziert werden;
• Ermitteln zweiter inter-sensortyp Merkmale, indem die ersten intra-sensortyp Merkmale in den zweiten latenten Raum (308-2) projiziert werden;
• Fusionieren der ersten intra-sensortyp Merkmale und der ersten inter-sensortyp Merkmale in dem ersten latenten Raum (308-1), um erste Merkmale (310-1) zu ermitteln;
• Fusionieren der zweiten intra-sensortyp Merkmale und der zweiten inter-sensortyp Merkmale in dem zweiten latenten Raum (308-2), um zweite Merkmale (310-2) zu ermitteln;
• Ermitteln erster rekonstruierter Sensordaten (512-1), indem die ersten Merkmale (310-1) mittels mindestens eines ersten Decoders (508-1, 510-1) rekonstruiert werden;
• Ermitteln zweiter rekonstruierter Sensordaten (512-2), indem die zweiten Merkmale (310-2) mittels mindestens eines zweiten Decoders (408-2, 510-2) rekonstruiert werden;
• Trainieren des ersten Encoders (306-1) basierend auf einem Vergleich der ersten rekonstruierten Sensordaten (512-1) mit den ersten Sensordaten (502-1); und
• Trainieren des zweiten Encoders (306-2) basierend auf einem Vergleich der zweiten rekonstruierten Sensordaten (512-2) mit den zweiten Sensordaten (502-2).

5. Verfahren (500) gemäß Anspruch 4, ferner aufweisend:

• Hinzufügen von erstem Rauschen (506-1) zu den ersten maskierten Sensordaten (504-1) bevor diese in den ersten Encoder (306-1) eingegeben werden;
• Hinzufügen von zweitem Rauschen (406-2) zu den zweiten maskierten Sensordaten (504-2) bevor diese in den zweiten Encoder (306-2) eingegeben werden;
• Ermitteln eines ersten vorhergesagten Rauschens (516-1) unter Verwendung der ersten Merkmale (310-1); und
• Ermitteln eines zweiten vorhergesagten Rauschens (516-2) unter Verwendung der zweiten Merkmale (310-2);
• wobei der erste Encoder (306-1) basierend auf einem Vergleich des ersten vorhergesagten Rauschens (516-1) mit dem ersten Rauschen (506-1) trainiert wird und wobei der zweite Encoder (306-2) basierend auf einem Vergleich des zweiten vorhergesagten Rauschens (516-2) mit dem zweiten Rauschen (506-2) trainiert wird.

6. Verfahren (500) gemäß Anspruch 4 oder 5, ferner aufweisend:

• Vorhersagen, unter Verwendung der zweiten Merkmale (310-2), einer ersten charakteristischen Eigenschaft (514-2) der ersten Sensordaten (502-1);
• Vorhersagen, unter Verwendung der ersten Merkmale (310-1), einer zweiten charakteristischen Eigenschaft (514-1) der zweiten Sensordaten (504-1);
• wobei der zweite Encoder (306-2) basierend auf einem Vergleich der vorhergesagten ersten charakteristischen Eigenschaft (514-2) mit der ersten charakteristischen Eigenschaft trainiert wird und wobei der erste Encoder (306) basierend auf einem Vergleich der vorhergesagten zweiten charakteristischen Eigenschaft (514-1) mit der zweiten charakteristischen Eigenschaft trainiert wird.

7. Steuervorrichtung (102), die eingerichtet ist, das Verfahren (200) gemäß einem der Ansprüche 1 bis 3 auszuführen und die Robotervorrichtung (100) unter Verwendung des erkannten zumindest einen Objekts (320) zu steuern.

8. Robotervorrichtung (100), welche die Steuervorrichtung (102) gemäß Anspruch 7 aufweist.

9. Computerprogramm mit Befehlen, die, wenn sie durch einen Prozessor ausgeführt werden, bewirken, dass der Prozessor das Verfahren (200, 500) gemäß einem der Ansprüche 1 bis 6 durchführt.

10. Computerlesbares Medium, das Befehle speichert, die, wenn sie durch einen Prozessor ausgeführt werden, bewirken, dass der Prozessor das Verfahren (200, 500) gemäß einem der Ansprüche 1 bis 6 durchführt.

100

106

109

102

108

104

110

110

110

110

112

Fig. 1

200

202

204

206

208

210

212

214

216

218

220

222

Fig. 2

Fig. 3

EP 4 723 053 A1

Fig. 4A

EP 4 723 053 A1

Fig.4B

Fig. 5

Europäisches
Patentamt

European
Patent Office

Office européen
des brevets

**Nummer der Anmeldung**

**EP 24 20 4349**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MOHAN ROHIT ET AL: "Progressive Multi-Modal Fusion for Robust 3D Object Detection", 8TH CONFERENCE ON ROBOT LEARNING (CORL 2024), 6. September 2024 (2024-09-06), XP093258551, Munich, Germany Gefunden im Internet: URL:https://openreview.net/pdf?id=Qoy12gkH4C [gefunden am 2025-03-12] * das ganze Dokument * & Anonymous: "Progressive Multi-Modal Fusion for Robust 3D Object Detection", CoRL 2024 reviews, 8. November 2024 (2024-11-08), XP093258561, Gefunden im Internet: URL:https://openreview.net/forum?id=Qoy12gkH4C [gefunden am 2025-03-12] * das ganze Dokument * & Anonymous: "How do I locate the date a submission is made public?", , 12. Juli 2024 (2024-07-12), XP093258571, Gefunden im Internet: URL:https://docs.openreview.net/getting-started/frequently-asked-questions/how-do-i-locate-the-date-a-submission-is-made-public [gefunden am 2025-03-12] * das ganze Dokument * -/-- | 1-10 | INV. G06V10/774 G06V10/80 G06V10/82 G06V20/56 |

**RECHERCHIERTE SACHGEBIETE (IPC)**

G06V

Der vorliegende Recherchenbericht wurde für alle Patentansprüche erstellt

| Recherchenort | Abschlußdatum der Recherche | Prüfer |
|---|---|---|
| Den Haag | 12. März 2025 | Hermes, Lothar |

**EUROPÄISCHER RECHERCHENBERICHT**

Europäisches Patentamt
European Patent Office
Office européen des brevets

**Nummer der Anmeldung**

**EP 24 20 4349**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | & Anonymous: "Note object for submission Qoyl2gkH4C", , 8. November 2024 (2024-11-08), XP093258584, Gefunden im Internet: URL:https://api2.openreview.net/notes?id=Q oyl2gkH4C [gefunden am 2025-03-12] * das ganze Dokument * & Anonymous: "Fields", , 12. Oktober 2024 (2024-10-12), XP093258580, Gefunden im Internet: URL:https://docs.openreview.net/reference/ api-v2/entities/note/fields [gefunden am 2025-03-12] * das ganze Dokument * ----- | | |
| X | JIAN ZOU ET AL: "UniM^2AE: Multi-modal Masked Autoencoders with Unified 3D Representation for 3D Perception in Autonomous Driving", ARXIV.ORG, CORNELL UNIVERSITY LIBRARY, 23. August 2024 (2024-08-23), XP091851996, ITHACA, NY | 4,6,9,10 | **RECHERCHIERTE SACHGEBIETE (IPC)** |
| A | * Seiten 5-8,12 * ----- | 1-3,5,7, 8 | |
| A | CN 118 212 405 A (HANGZHOU XIANGSUYUAN TECH CO LTD) 18. Juni 2024 (2024-06-18) * Abbildung 2 * ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 12. März 2025 | Hermes, Lothar |

**ANHANG ZUM EUROPÄISCHEN RECHERCHENBERICHT**
**ÜBER DIE EUROPÄISCHE PATENTANMELDUNG NR.**

EP 24 20 4349

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2025

| Im Recherchenbericht angeführtes Patentdokument | Datum der Veröffentlichung | Mitglied(er) der Patentfamilie | Datum der Veröffentlichung |
|---|---|---|---|
| CN 118212405 A | 18-06-2024 | KEINE | |

Für nähere Einzelheiten zu diesem Anhang : siehe Amtsblatt des Europäischen Patentamts, Nr.12/82